# EUROPEAN PATENT APPLICATION

(11) **EP 4 685 008 A1**
(43) Date of publication of application: **28.01.2026**
(21) Application number: 25192235.7
(22) Date of filing: 28.07.2025
(51) Int. Cl.: B60N 2/28

(54) **SUPPORT DEVICE AND SAFETY SEAT**

(30) Priority: 26.07.2024 CN 202411021361
(71) Applicant: Wonderland Switzerland AG, 6312 Steinhausen (CH)
(72) Inventor: ZHANG, Daliang, Dongguan, Guangdong, 523648 (CN); FANG, Ganqing, Dongguan, Guangdong, 523648 (CN); LI, Yujin, Dongguan, Guangdong, 523648 (CN); LIANG, Jiajun, Dongguan, Guangdong, 523648 (CN)
(74) Representative: Lucke, Andreas

(57) **Abstract**

The present application provides a support device with reliable indication information and a safety seat. The support device includes a linkage rod (134), a contact indication structure (133) including an abutting shell (200) and a pushing member (31), an indication member (32) with a first indication information (321) and a transmission member (3) extending between the pushing member (31) and the indication member (32), all movable disposed. The linkage rod (134) and pushing member (31) are located at opposite sides of the linkage rod (134). The first indication information (321) is hidden within the abutting shell (200) when the pushing member (31) is in the first position, and is exposed from the abutting shell (200) when the pushing member (31) is in the second position, the first indication information (321).

## Description

### TECHNICAL FIELD

The present disclosure relates to a support device and a safety carrier.

### BACKGROUND

The safety carrier, such as a safety seat, is a seating device designed for children, pets, etc. In the event of a vehicle collision or sudden deceleration, the safety seat is generally provided with a support device to prevent the safety seat from sliding forward or tipping over. The safety seat in the related art is installed on the vehicle seat, and the support device contacts a floor of the vehicle to enhance installation stability and usage reliability of the safety seat.

### SUMMARY

The present disclosure provides a support device and a safety seat, which can reliably determine whether they are in contact with the ground.

According to one aspect of the present disclosure, a support device includes a linkage rod and a contact indication structure. The contact indication structure includes an abutting shell, a pushing member, an indication member and a transmission member. The linkage rod is movable relative to the abutting shell along a first direction. The pushing member is movable relative to the abutting shell and has a first position and a second position. The pushing member is located at one side of the linkage rod in the second direction intersecting with the first direction. The indication member is movable relative to the abutting shell and provided with a first indication information, the indication member is located at the other side of the linkage rod in the second direction. The transmission member is movable relative to the abutting shell and extends between the pushing member and the indication member. When the pushing member is in the first position, the first indication information is hidden within the abutting shell; and when the pushing member is in the second position, the first indication information is exposed from the abutting shell, the pushing member being movable towards the second position relative to the abutting shell to drive the indication member and the transmission member to move relative to the abutting shell.

According to an embodiment of the present disclosure, the transmission member is pivotally connected to the abutting shell, the transmission member is fixedly connected to the indication member, the pushing member is slidably connected to the abutting shell, the pushing member slides towards the second position relative to the abutting shell to drive the transmission member and the indication member to rotate together along a positive direction relative to the abutting shell.

According to an embodiment of the present disclosure, the transmission member includes an abutting part, the abutting part and the pushing member are located at a same side of the linkage rod in the second direction, when the pushing member is in the first position, at least a part of the abutting part is disposed opposed to the pushing member in a sliding direction of the pushing member, the pushing member slides towards the second position to drive the abutting part to rotate along the positive direction relative to the abutting shell, to drive the transmission member and the indication member to rotate together along the positive direction relative to the abutting shell.

According to an embodiment of the present disclosure, the abutting part includes an abutting plane parallel to the second direction, the pushing member slides along the first direction, when the pushing member is in the first position; the abutting plane is opposed to the pushing member along the first direction.

According to an embodiment of the present disclosure, when the pushing member is in the first position, the abutting plane is perpendicular to the first direction; and when the pushing member is in the second position, the abutting plane is parallel to the first direction.

According to an embodiment of the present disclosure, the transmission member further includes a rotating shaft, the rotating shaft extends along the second direction and is pivotally connected to the abutting shell around the second direction, and the abutting part and the indication member are secured to the rotating shaft, respectively.

According to an embodiment of the present disclosure, the rotating shaft extends through the linkage rod in the second direction, and the linkage rod is slidably connected to the rotating shaft along the first direction.

According to an embodiment of the present disclosure, the contact indication structure further includes a torsion spring sleeved over the rotating shaft. The torsion spring includes a first lead-out end connected to the abutting shell and a second lead-out end connected to the indication member, or the torsion spring includes a first lead-out end connected to the abutting shell and a second lead-out end connected to the abutting part.

According to an embodiment of the present disclosure, the contact indication structure further includes a first reset member for driving the transmission member to rotate in a reverse direction opposite to the positive direction relative to the abutting shell, the first reset member is disposed between the indication member and the abutting shell or between the transmission member and the abutting shell.

According to an embodiment of the present disclosure, the indication member includes a limiting part, the abutting shell includes a blocking part located at a side of the limiting part in a reverse direction opposite to the positive direction, when the pushing member is in the first position, the limiting part abuts against the blocking part to prevent the transmission member and the indication member from rotating together in the reverse direction relative to the abutting shell.

According to an embodiment of the present disclosure, the contact indication structure further includes a second reset member. The second reset member is located between the pushing member and the abutting shell and drives the pushing member to slide towards the first position.

According to an embodiment of the present disclosure, the pushing member is movable along the first direction relative to the abutting shell. The pushing member further includes a pushing part, a first limiting part, a second limiting part, a third limiting part, a fourth limiting part, and a fifth limiting part. The second limiting part and the third limiting part are located at opposite sides of the abutting shell in the second direction. The fourth limiting part and the fifth limiting part are located at opposite sides of the abutting shell along the third direction. When the pushing member is in the first position, the pushing part protrudes from the abutting shell, and the first limiting part abuts against the abutting shell along the first direction. When the pushing member is in the second position, at least one of the second limiting part and the third limiting part abuts against the abutting shell in the second direction, and at least one of the fourth limiting part and the fifth limiting part abuts against the abutting shell along the third direction. The first direction, the second direction, and the third direction are perpendicular to each other in pairs.

According to an embodiment of the present disclosure, the support device further includes a support tube. The support tube includes a first support tube connected to the abutting shell and a second support tube sleeved over the first support tube. The second support tube is provided with a plurality of engaging holes arranged along the first direction.

The support device further includes an adjustment structure. The adjustment structure includes an engaging hook, an unlocking button and a linkage assembly. The engaging hook is disposed inside the first support tube and swinging around a third direction relative to the first support tube, the third direction intersecting with both the first direction and the second direction. The unlocking button slides along the third direction relative to the first support tube. The linkage assembly is disposed between the engaging hook and the unlocking button. The linkage assembly includes a linkage rod. The linkage rod is disposed inside the first support tube and slides along the first direction relative to the first support tube. The linkage rod is slidably connected to both the unlocking button and the engaging hook. The unlocking button slides along the third direction to drive the linkage rod to slide along the first direction, thereby driving the engaging hook to swing around the third direction relative to the first support tube to engage with or disengage from any one of the engaging holes.

According to another aspect of the present disclosure, a safety seat includes a base and a support device of the present disclosure. The base is provided with a connecting member for connection to a vehicle seat. The support device has an unfolded state away from the base and a folded state adhering to the base, when the support device is in the unfolded state, the pushing member is located at a side of the linkage rod close to the connecting member in the second direction, the indication member is located at a side of the linkage rod away from the connecting member in the second direction.

According to an embodiment of the present disclosure, the indication member is fixedly connected to both the transmission member and the pushing member. The pushing member slides relative to the abutting shell, to drive the transmission member and the indication member to slide together relative to the abutting shell, and the indication member is capable of being deformed relative to the abutting shell.

According to an embodiment of the present disclosure, the indication member includes a connecting part and an elastic arm extending from the connecting part. The connecting part is connected to the transmission member. The abutting shell is provided with a sliding channel to allow the elastic arm slide. The pushing member slides along the first direction. The sliding channel extends along a third direction. The third direction intersects with both the first direction and the second direction. The connecting part slides along the first direction to drive the elastic arm to slide along the sliding channel and to be elastically deformed. The first indication information is provided on the elastic arm.

According to an embodiment of the present disclosure, the transmission member includes a transmission arm that is at least partially located at a side of the linkage rod along a third direction, and the third direction intersects with both the first direction and the second direction.

According to an embodiment of the present disclosure, the pushing member is fixedly connected to the transmission member, and the indication member is slidably connected to the transmission member. The pushing member and the transmission member slide relative to the abutting shell along the first direction to drive the indication member to slide relative to the abutting shell along a third direction. The third direction intersects with both the first direction and the second direction.

According to an embodiment of the present disclosure, the transmission member is a pin extending in the second direction. The indication member is provided with a beveled slot in which the pin may slide. An extending direction of the beveled slot intersects with both the first direction and the third direction. The abutting shell is provided with a sliding slot to allow the pin to slide along the first direction.

According to another aspect of the present disclosure, a support device includes a linkage rod and a contact indication structure. The contact indication structure includes an abutting shell, a pushing member, and an indication member. The abutting shell is movably connected to the linkage rod. The pushing member is movable relative to the abutting shell and has a first position and a second position, and is spaced apart from the linkage rod. The indication member is movable relative to the abutting shell and is provided with first indication information. The pushing member is movable relative to the abutting shell to drive the indication member to move relative to the abutting shell in a first movement direction. When the pushing member is in the first position, the first indication information is hidden in the abutting shell. When the pushing member is in the second position, the first indication information is exposed from the abutting shell. The indication member is movable relative to the abutting shell in a second movement direction different from the first movement direction to drive the linkage rod to move relative to the support tube.

According to an embodiment of the present disclosure, the pushing member slides relative to the abutting shell, and the indication member rotates relative to the abutting shell. The pushing member slides relative to the abutting shell to drive the indication member to rotate relative to the abutting shell. When the pushing member is in the first position, at least a part of the pushing member is opposed to at least a part of the indication member in the sliding direction of the pushing member.

According to an embodiment of the present disclosure, the support device further includes a drive block that is slidably connected to the abutting shell and pivotally connected to the indication member. Projections of the drive block and the pushing member on a plane perpendicular to the sliding direction of the pushing member are not overlapped.

According to an embodiment of the present disclosure, the indication member slides relative to the abutting shell to drive the linkage rod to move relative to the support tube.

According to an embodiment of the present disclosure, the support device further includes a drive block that is slidably connected to both the abutting shell and the linkage rod. The indication member is connected to the drive block and is slidably connected to the abutting shell via the drive block to slide relative to the abutting shell. The drive block slides relative to the abutting shell to drive the linkage rod to slide relative to the support tube.

According to an embodiment of the present disclosure, when the pushing member is in the first position, the indication member does not protrude from the abutting shell and hides the first indication information. When the pushing member is in the second position, the indication member protrudes from the abutting shell and reveals the first indication information.

According to an embodiment of the present disclosure, the support device further includes a reset rod and a second reset member. The reset rod is connected to the pushing member and is movable relative to the linkage rod. The second reset member is located between the reset rod and the linkage rod. When the pushing member is in the second position, the second reset member drives the reset rod to move relative to the linkage rod, to drive the pushing member to move towards the first position.

According to an embodiment of the present disclosure, the support device further includes a support tube. The support tube includes a first support tube connected to the abutting shell and a second support tube sleeved over the first support tube. The second support tube is provided with a plurality of engaging holes arranged along the first direction. The support device further includes an adjustment structure. The adjustment structure includes an engaging hook, a drive block, the indication member, and a linkage assembly. The engaging hook swings around a third direction relative to the first support tube, and the third direction intersects with both the first direction and the second direction. The drive block is slidably connected to the abutting shell along the third direction. The indication member is connected to the drive block. The linkage assembly is disposed between the engaging hook and the drive block and includes the linkage rod. The linkage rod is disposed inside the first support tube and is slidably connected to the first support tube. The linkage rod is slidably connected to both the drive block and the engaging hook. The indication member and the drive block slide along the third direction to drive the linkage rod to slide along the first direction, to drive the engaging hook to swing around the third direction relative to the first support tube to engage with or disengage from any one of the engaging holes.

According to another aspect of the present disclosure, a safety seat includes a base and the support device of the present disclosure. The base is provided with a connecting member for connecting to a vehicle seat. The support device has an unfolded state away from the base and a folded state adhering to the base. When the support device is in the unfolded state, the pushing member is located at a side of the linkage rod close to the connecting member in the second direction, and the indication member is located at a side of the linkage rod away from the connecting member in the second direction.

The embodiment of the present disclosure at least has following advantages or beneficial effects:
The support device of the present disclosure includes a support tube, a linkage rod, and a contact indication structure. The contact indication structure includes an abutting shell, a pushing member, an indication member, and a transmission member. The pushing member and the indication member are located at opposite sides of the linkage rod. The pushing member is switchable between the first position and the second position relative to the abutting shell and drives the movement of the transmission member and the indication member during a switching process. When the pushing member is in the first position, the first indication information on the indication member is hidden in the abutting shell. When the pushing member is in the second position, the first indication information on the indication member is exposed from the abutting shell. A user can determine whether the support device is in contact with the ground by observing the first indication information.

In the support device of the present disclosure, the transmission path from the pushing member to the indication member is short, and the movement is smooth, which can reduce the likelihood of jamming, and thereby facilitate minimizing misjudgments regarding whether the device is in contact with the ground, and ensuring the safety and reliability of the device in use.

### BRIEF DESCRIPTION OF THE DRAWINGS

FIG. 1A is a perspective view of a safety carrier according to an embodiment of the present disclosure, in which the support device is in an unfolded state.
FIG. 1B is a right view of FIG. 1A.
FIG. 1C is a perspective view of the safety carrier according to an embodiment of the present disclosure, in which the support device is in a folded state.
FIG. 2A is a perspective view of the support device of the present disclosure in a ground-contact state, in which a second support tube is hidden.
FIG. 2B is a perspective view of the support device of the present disclosure in a non-ground-contact state, in which a second support tube is hidden.
FIG. 3A is a sectional perspective view of a support device according to a first embodiment of the present disclosure.
FIG. 3B is a perspective view of a support device according to a first embodiment of the present disclosure, in which a support tube, a part of the abutting shell of the contact indication structure, and a part of the adjustment structure are hidden.
FIG. 3C is a partial sectional view of the support device according to the first embodiment of the present disclosure.
FIG. 3D is a perspective view of the support device according to the first embodiment of the present disclosure, in which the support tube, a part of the abutting shell of the contact indication structure and a part of the adjustment structure are hidden.
FIG. 3E is a partial perspective view of the support device according to the first embodiment of the present disclosure, in which a part of the abutting shell of the contact indication structure is hidden.
FIG. 3F is a sectional view of a contact indication structure of the support device according to the first embodiment of the present disclosure, in which the support device is in the non-ground-contact state.
FIG. 3G is a sectional view of the contact indication structure of the support device according to the first embodiment of the present disclosure, in which the support device is in the ground-contact state.
FIG. 3H is a sectional view of the contact indication structure of the support device according to the first embodiment of the present disclosure at another position, showing a second reset member, where the support device is in the non-ground-contact state.
FIG. 4A is a partial perspective view of the support device according to the first embodiment of the present disclosure in the non-ground-contact state, in which a part of the abutting shell of the contact indication structure is hidden, and showing the position of the abutting part.
FIG. 4B is a partial perspective view of the support device according to the first embodiment of the present disclosure in the non-ground-contact state, in which a part of the abutting shell of the contact indication structure is hidden, and showing the position of the indication member.
FIG. 4C is a partial perspective view of the support device according to the first embodiment of the present disclosure in an intermediate state, in which a part of the abutting shell of the contact indication structure is hidden, and showing the position of the abutting part.
FIG. 4D is a partial perspective view of the support device according to the first embodiment of the present disclosure in the intermediate state, in which a part of the abutting shell of the contact indication structure is hidden, and showing the position of the indication member.
FIG. 4E is a partial perspective view of the support device according to the first embodiment of the present disclosure in the ground-contact state, in which a part of the abutting shell of the contact indication structure is hidden, and showing the position of the abutting part.
FIG. 4F is a partial perspective view of the support device according to the first embodiment of the present disclosure in the ground-contact state, in which a part of the abutting shell of the contact indication structure is hidden, and showing the position of the indication member.
FIG. 5A is a partial exploded view of a support device according to a second embodiment of the present disclosure, in which the first support tube is hidden.
FIG. 5B is a partial sectional view of the support device according to the second embodiment of the present disclosure, in which the support device is in the non-ground-contact state.
FIG. 5C is a partial sectional view of the support device according to the second embodiment of the present disclosure, in which the support device is in the ground-contact state.
FIG. 5D is a perspective view of a pushing member, a transmission member, and an indication member of the support device according to the second embodiment of the present disclosure, in which the support device is in the non-ground-contact state.
FIG. 5E is a perspective view of the pushing member, the transmission member, and the indication member of the support device according to the second embodiment of the present disclosure, in which the support device is in the non-ground-contact state.
FIG. 5F is a partial perspective view of the support device according to the second embodiment of the present disclosure, in which a support tube, a part of the abutting shell of the contact indication structure, and a part of the adjustment structure are hidden.
FIG. 6A illustrates a partial exploded view of a support device according to a third embodiment of the present disclosure, in which a linkage rod is hidden.
FIG. 6B is a partial perspective view of the support device according to the third embodiment of the present disclosure, in which the support tube, a part of the abutting shell of the contact indication structure, and a part of the adjustment structure are hidden.
FIG. 6C is a sectional view of the contact indication structure of the support device according to the third embodiment of the present disclosure, in which the support device is in the non-ground-contact state.
FIG. 6D is a sectional view of a contact indication structure of the support device according to the third embodiment of the present disclosure, in which the support device is in the ground-contact state.
FIG. 6E is a partial perspective view of the support device according to the third embodiment of the present disclosure, in which the support tube, a part of the abutting shell of the contact indication structure, and a part of the adjustment structure are hidden.
FIG. 7A is a partial perspective view of a support device according to a fourth embodiment of the present disclosure, in which a support tube, a linkage rod, a part of the abutting shell of the contact indication structure, and a part of the adjustment structure are hidden.
FIG. 7B is a sectional view of a contact indication structure of the support device according to the fourth embodiment of the present disclosure, in which the support device is in the non-ground-contact state.
FIG. 7C is a sectional view of the contact indication structure of the support device according to the fourth embodiment of the present disclosure, in which the support device is in the ground-contact state.
FIG. 7D is a partial front view of the support device according to the fourth embodiment of the present disclosure in the non-ground-contact state along one direction of the second directions, in which a part of the abutting shell of the contact indication structure is hidden, and showing the indication member.
FIG. 7E is a partial front view of the support device according to the fourth embodiment of the present disclosure in the non-ground-contact state along the other direction of the second directions, in which a part of the abutting shell of the contact indication structure is hidden, and showing the pushing part.
FIG. 7F is a partial front view of the support device according to the fourth embodiment of the present disclosure in the ground-contact state along one direction of the second directions, in which a part of the abutting shell of the contact indication structure is hidden, and showing the indication member.
FIG. 7G is a partial front view of the support device according to the fourth embodiment of the present disclosure in the ground-contact state along one direction of the second directions, in which a part of the abutting shell of the contact indication structure is hidden, and showing the pushing part.
FIG. 7H is a partial perspective view of a support device according to a fifth embodiment of the present disclosure, in which the support tube, the linkage rod, a part of the abutting shell of the contact indication structure, and a part of the adjustment structure are hidden.
FIG. 7I is a partial perspective view of the support device according to the fifth embodiment of the present disclosure, in which the support tube, a part of the abutting shell of the contact indication structure, and a part of the adjustment structure are hidden.
FIG. 8A is a partial exploded view of a support device according to a sixth embodiment of the present disclosure, in which the linkage rod is hidden.
FIG. 8B is a partial perspective view of a support device according to a sixth embodiment of the present disclosure, in which the support tube, a part of the abutting shell of the contact indication structure, and a part of the adjustment structure are hidden.
FIG. 8C is a partial longitudinal sectional view of a support device according to a sixth embodiment of the present disclosure in the ground-contact state, showing cooperation between a linkage rod and a drive block.
FIG. 8D is a partial sectional view of the support device according to the sixth embodiment of the present disclosure in the non-ground-contact state, showing the cooperation between the pushing member and the indication member.
FIG. 8E is a partial sectional view of the support device according to the sixth embodiment of the present disclosure in the ground-contact state, showing the cooperation between the pushing member and the indication member.
FIG. 8F is a partial perspective view of the support device according to the sixth embodiment of the present disclosure in the non-ground-contact state.
FIG. 8G is a partial perspective view of the support device according to the sixth embodiment of the present disclosure in the ground-contact state.

### DETAILED DESCRIPTION

Exemplary embodiments will now be described more fully by reference to the accompanying drawings. However, the exemplary embodiments can be implemented in various forms and should not be understood as being limited to the examples set forth herein; rather, the embodiments are provided so that this disclosure will be thorough and complete, and the conception of exemplary embodiments will be fully conveyed to those skilled in the art. The same reference signs in the drawings denote the same or similar structures and detailed description thereof will be omitted. Although some identical terms are denoted by different reference numerals, the structures of these identical terms are the same or similar.

During the use of the support device, it is possible that the support device is not in contact with the floor of the vehicle, which may cause safety risk in the use of the safety seat. In the related art, it is determined that the support device comes into contact with the floor of the vehicle by providing a ground-contact indication structure on the safety seat. A ground-contact indication device in the related art has a complex structure and usually includes a flexible pulling rope. The flexible pulling rope is prone to jamming during operation, which is inconvenient to use and can easily lead to misjudgment, resulting in low usage reliability.

The present disclosure provides a support device and a safety seat, which can reliably determine whether they are in contact with the ground.

The safety carrier of the present disclosure may be a child safety seat or a pet safety seat installed on a vehicle seat. In some other embodiments, the safety carrier may also be a stroller, a crib, a high chair, or the like. The safety carrier of the present disclosure includes a support device, and it is necessary to confirm whether the support device is properly supported. In other embodiments, any carrier, which includes a support device and requires confirmation of whether the support device is properly supported, may also use the support device of the present disclosure.

Hereinafter, a structure of the safety carrier of the present disclosure by taking the child safety seat as an example will be described in detail.

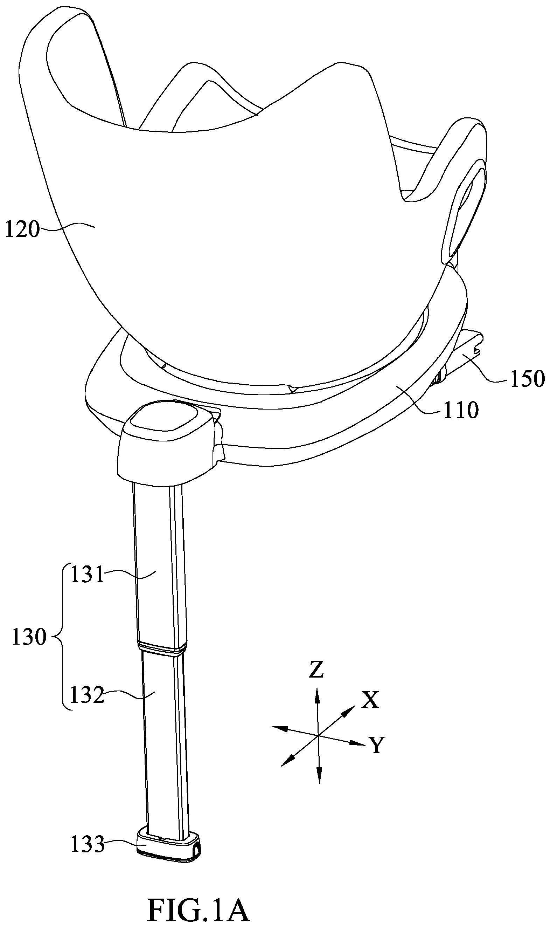

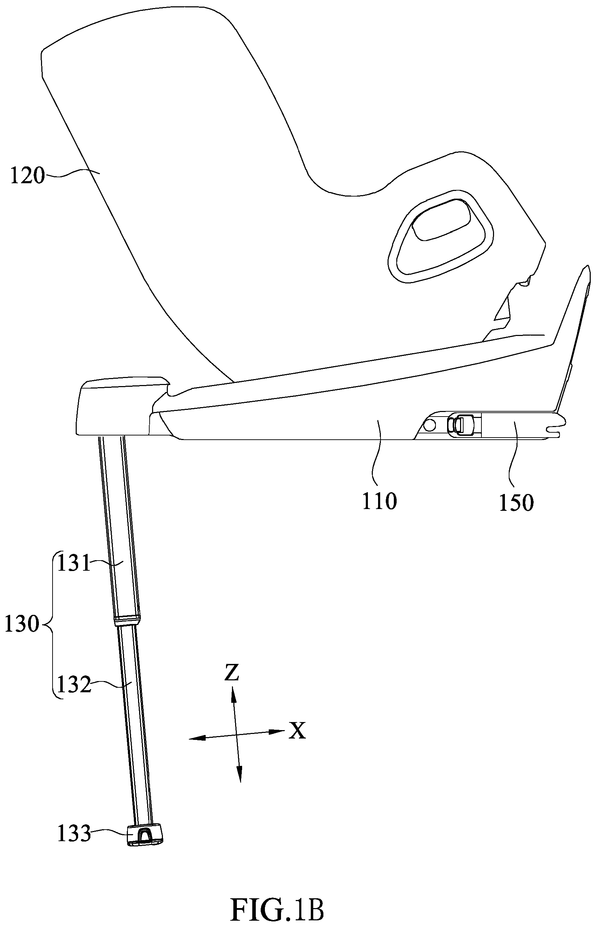

As shown in FIG. 1A and FIG. 1B, the child safety seat includes a base 110, a seat 120, and a support device. The base 110 may be fixed to the vehicle seat. The seat 120 is configured to carry an occupant, such as a child or a pet. The support device is configured to prevent the child safety seat from tipping over.

The base 110 is provided with a connecting member 150 connected to the vehicle seat.

The support device has a rod-shaped structure. When the support device is in an unfolded state, one end of the support device is connected to the base 110, and the other end of the support device is supported on a vehicle floor away from the base 110.

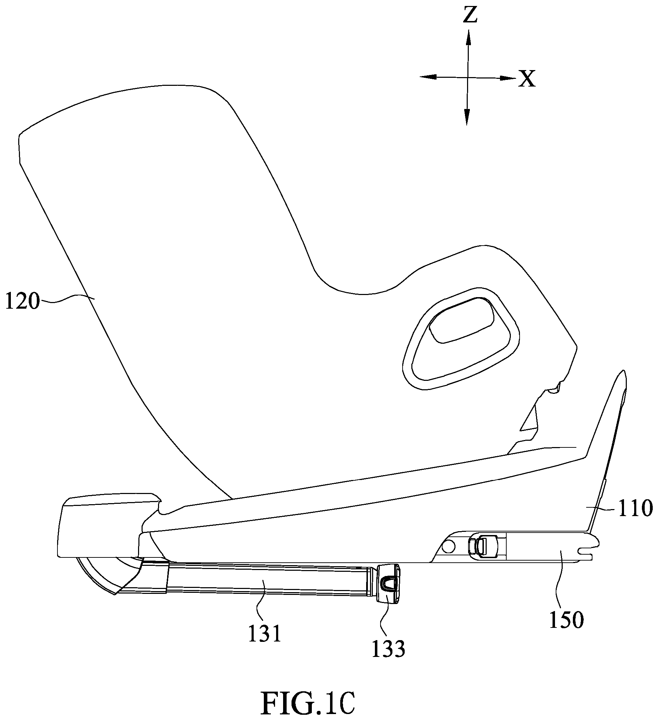

As shown in FIG. 1C, in some embodiments, for easy storage, the support device is foldable. When the support device is in a folded state, the support device is attached to the base 110 to reduce a space occupied by the child safety seat after storage.

As shown in FIG. 1A and FIG. 1B, in some embodiments, in order to adapt to various vehicle models with different seat-to-floor heights, the support device is extendable and retractable. Specifically, the support device includes a support tube 130. The support tube 130 includes a first support tube 132 and a second support tube 131 sleeved over the first support tube 132. One end of the second support tube 131 is connected to the base 110. One end of the first support tube 132 is supported on the vehicle floor. The other end of the first support tube 132 may be retracted into the other end of the second support tube 131 or extended out of the other end of the second support tube 131, thereby adjusting length of the support tube 130 to accommodate various vehicle models with different seat-to-floor heights.

The support device of the present disclosure also includes an adjustment structure to maintain the length of the support tube 130 at an adjusted length and prevent further extension or retraction. The adjustment structure may lock the first support tube 132 and the second support tube 131, which are movable relative to each other, after the length of the support tube 130 is adjusted. The adjustment structure may also unlock the first support tube 132 and the second support tube 131 when it is necessary to adjust the length of the support tube 130. Specifically, some components of the adjustment structure are movably connected to the support tube 130.

In the present disclosure, a direction parallel to an extending direction of the support tube 130 is defined as a first direction Z, and two directions respectively intersecting with the first direction Z are defined as a second direction X and a third direction Y, which also intersect with each other. In the embodiments corresponding to FIG. 1 to FIG. 8G, the first direction Z, the second direction X, and the third direction Y are perpendicular to each other in pairs. When the support device is in the unfolded state as shown in FIG. 1A and FIG. 1B, the support device is located at a side of the base 110 away from the connecting member 150 in the second direction X, that is, the support device and the connecting member 150 are located at opposite sides of the base 110 in the second direction X.

In order to detect whether the support device is firmly supported on the vehicle floor, the support device of the present disclosure also includes a contact indication structure 133. The contact indication structure 133 is provided at an end of the support tube 130 away from the base 110 along the first direction Z. Specifically, as shown in FIG. 1A, the contact indication structure 133 is provided at an end of the first support tube 132 away from the second support tube 131.

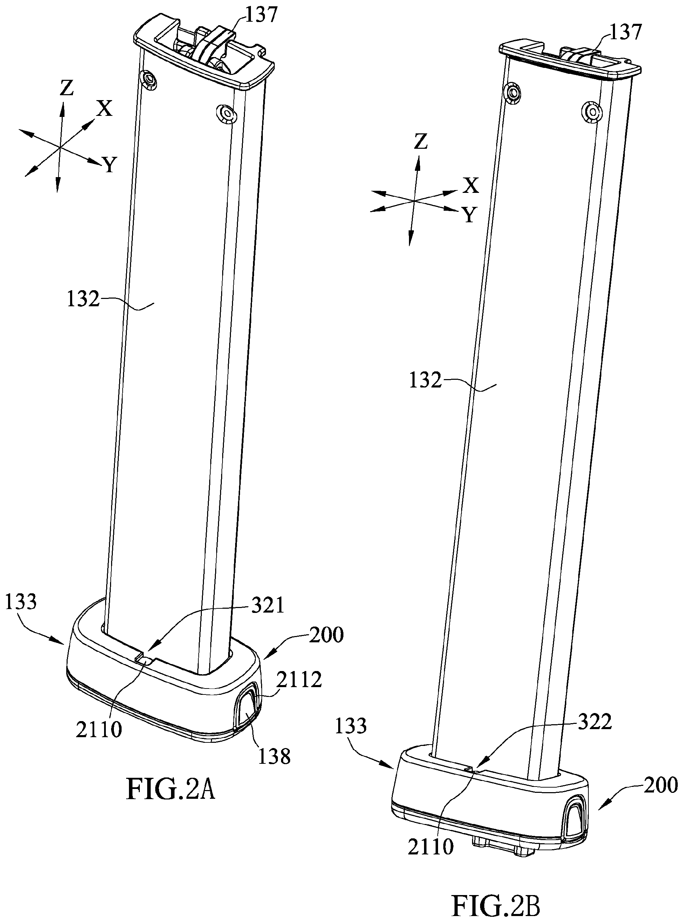

Referring to FIG. 2A, it can be seen that when the support device is in the ground-contact state, that is, when the support device is stably supported on the vehicle floor, the first indication information 321 (i.e., the safety indication information part) of the contact indication structure 133 is exposed outside the contact indication structure 133. A user may observe the first indication information 321, thereby confirming that the support device is in the ground-contact state and the child safety seat has been safely supported on the vehicle floor via the support device.

Referring to FIG. 2B, it can be seen that when the support device is in the non-ground-contact state, that is, when the support device is not stably supported on the vehicle floor, the user cannot observe the safety indication information part 321 within the contact indication structure 133. Alternatively, at this time, the user may observe the second indication information part 322 (i.e., the safety warning information), which means that the child safety seat has not yet stably supported on the vehicle floor and needs to be adjusted or handled until the first indication information 321 may be observed. Therefore, the contact indication structure 133 in the support device of the present disclosure can effectively display the ground-contact state of the safety carrier and avoid dangers caused thereby.

Generally, the support device of the present disclosure includes the support tube 130, the adjustment structure, and the contact indication structure 133. The contact indication structure 133 includes an abutting shell 200, a pushing member 31, an indication member 32, and a transmission member 3. The abutting shell 200 is fixedly connected to the support tube 130. The abutting shell 200 is configured to abut against the vehicle floor when the support device is properly supported. The pushing member 31 is configured to maintain contact with the vehicle floor while the support device is switched from an unsupported state to a supported state. The pushing member 31 is movable relative to the abutting shell 200 and has a first position and a second position. The indication member 32 is configured to indicate whether the support tube 130 is stably supported. The indication member 32 is movable relative to the abutting shell 200 and is provided with the first indication information 321. The indication member 32 is spaced apart from the pushing member 31. The transmission member 3 is movable relative to the abutting shell 200 and extends between the pushing member 31 and the indication member 32. The pushing member 31 is movable relative to the abutting shell 200 to drive the indication member 32 and the transmission member 3 to move relative to the abutting shell 200, but not drive any components of the adjustment structure to move relative to the abutting shell 200 or the support tube 130. When the pushing member 31 is in the first position, the first indication information 321 is hidden within the abutting shell 200. When the pushing member 31 is in the second position, the first indication information 321 is exposed from the abutting shell 200. The first position of the pushing member 31 corresponds to the non-ground-contact state of the support device, and the second position of the pushing member 31 corresponds to the ground-contact state of the support device, thereby reminding the user whether the support device is properly installed. Generally, when the pushing member 31 is in the first position, at least a part of the pushing member 31 protrudes from the abutting shell 200 to contact the vehicle floor before the abutting shell 200. When the pushing member 31 is subjected to an abutting force from the vehicle floor, the pushing member 31 may move relative to the abutting shell 200.

### The First Embodiment of The Support Device

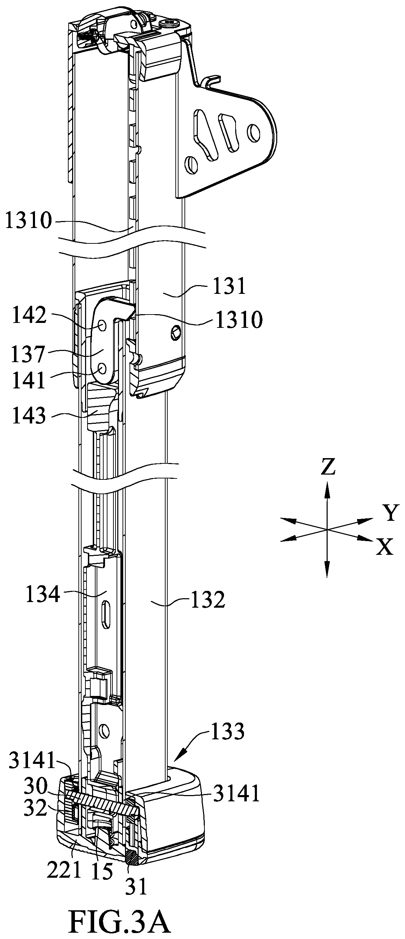

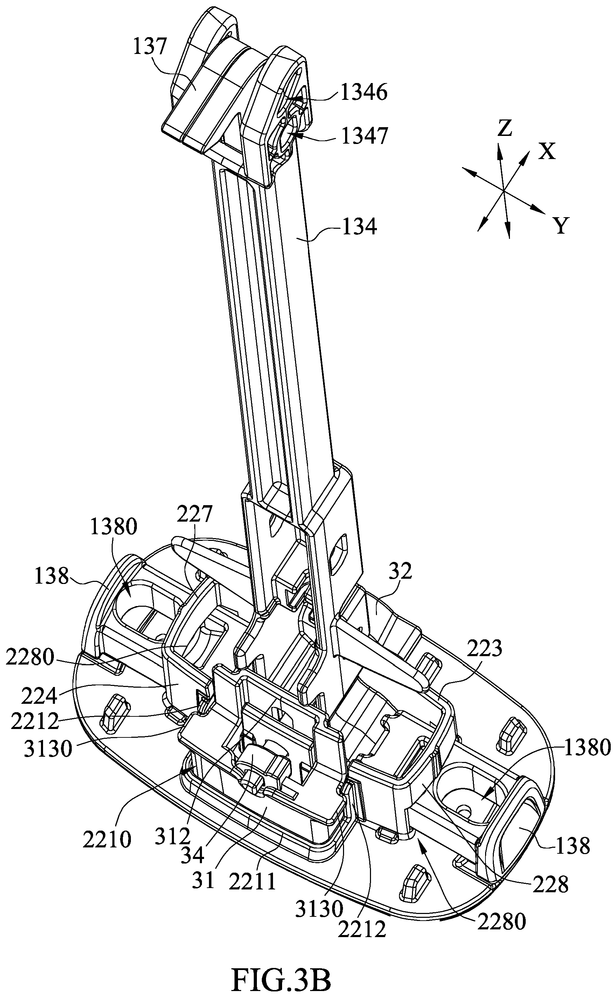

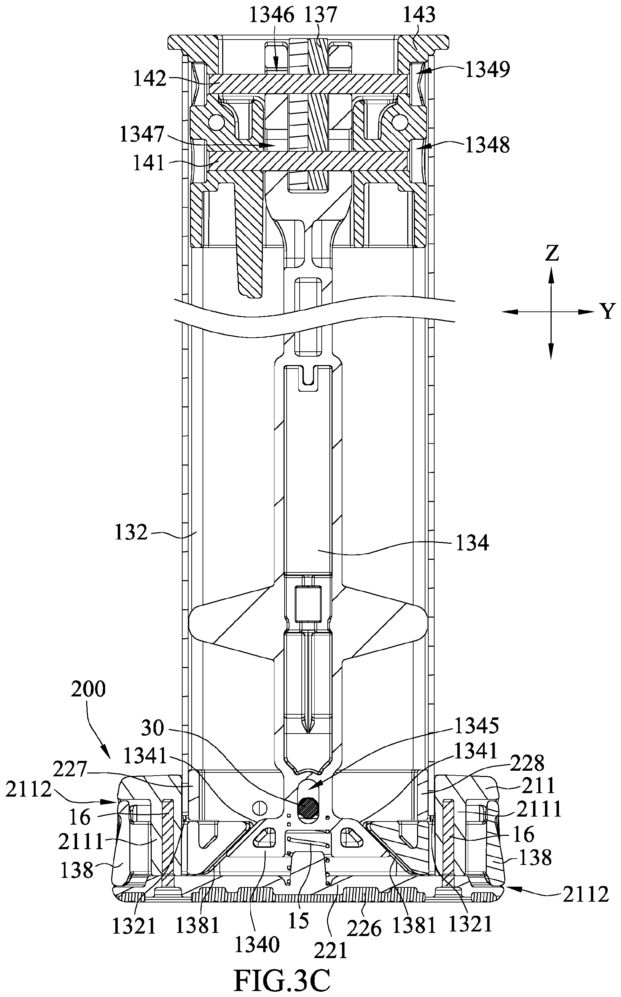

Referring to FIG. 3A, FIG. 3B, and FIG. 3C, the second support tube 131 is provided with a plurality of engaging holes 1310 arranged along the first direction Z. The adjustment structure includes an engaging hook 137, two unlocking buttons 138, a linkage assembly, and an elastic element 15. The adjustment structure is disposed on the first support tube 132. The engaging hook 137, the two unlocking buttons 138, and some components of the linkage assembly are movable relative to the first support tube 132, while the elastic element 15 is configured to elastically deform relative to the first support tube 132. When the engaging hook 137 engages with the engaging hole 1310 on the second support tube 131, it is possible to limit relative movement between the first support tube 132 and the second support tube 131, thereby fixing a length of the support tube 130. When the engaging hook 137 disengages from the engaging hole 1310 on the second support tube 131, the first support tube 132 and the second support tube 131 may move relative to each other to adjust the length of the support tube 130. The linkage assembly is disposed between the unlocking button 138 and the engaging hook 137. The unlocking button 138 is movable relative to the first support tube 132 to drive the engaging hook 137 to disengage from the engaging hole 1310 via the linkage assembly. The elastic element 15 drives the engaging hook 137 to engage with the engaging hole 1310 via the linkage assembly.

Referring to FIG. 3A, FIG. 3B, and FIG. 3C, the linkage assembly includes a linkage rod 134, a limiting rod 141, and a drive rod 142, all of which are movable relative to the first support tube 132. The limiting rod 141 and the drive rod 142 are fixedly connected to the engaging hook 137. The linkage rod 134 is movably connected to the engaging hook 137 via the limiting rod 141 and the drive rod 142. Specifically, the unlocking button 138 is movable relative to the first support tube 132 to drive the linkage rod 134 to move relative to the first support tube 132. The linkage rod 134 is movable relative to the first support tube 132 to drive the drive rod 142 and the limiting rod 141 to move together relative to the first support tube 132, to drive the engaging hook 137 to move relative to the first support tube 132 so as to engage with or disengage from the engaging hole 1310 on the second support tube 131.

Referring to FIG. 3C, the linkage assembly also includes a positioning plug 143, which is fixed to the first support tube 132 and located inside the first support tube 132. The positioning plug 143 is provided with a pivot hole1348 to allow the limiting rod 141 to pass through. The limiting rod 141 extends through the positioning plug 143, the linkage rod 134, and the engaging hook 137 along the third direction Y and is pivotally connected to the positioning plug 143. Specifically, the limiting rod 141 rotates around the third direction Y relative to the positioning plug 143, to indirectly rotate relative to the first support tube 132. The drive rod 142 extends through the positioning plug 143, the linkage rod 134, and the engaging hook 137 along the third direction Y and is movably connected to the positioning plug 143. Specifically, the positioning plug 143 is provided with a clearance hole 1349 through which the drive rod 142 may slide, and the clearance hole 1349 extends along the second direction X, such that the drive rod 142 may slide within the clearance hole 1349 along a extending direction of the clearance hole 1349, and furthermore, the engaging hook 137 may move along the second direction X with the drive rod 142 and simultaneously drive the limiting rod 141, which is fixedly connected to the engaging hook 137, to rotate around the third direction Y. As can be seen, the clearance hole 1349 is a hole that allows the drive rod 142 to move around a position where the limiting rod 141 is located, and thus the clearance hole 1349 may also be an arc-shaped hole extending around the limiting rod 141. The drive rod 142 is spaced apart from the limiting rod 141 along the first direction Z and is closer to a hook portion of the engaging hook 137 than the limiting rod 141, in order to drive the hook portion to rotate around the third direction Y to move by a larger movement to engage with or disengage from the engaging hole 1310.

Referring to FIG. 3B, and FIG. 3C, the linkage rod 134 is movable relative to the first support tube 132 along the first direction Z, that is, the linkage rod 134 may be movable within the first support tube 132 along the extending direction of the first support tube 132. The linkage rod 134 is provided with a sliding hole 1347 through which the limiting rod 141 may pass, and the sliding hole 1347 extends along the first direction Z, such that the limiting rod 141 may slide within the sliding hole 1347 along the extending direction of the sliding hole 1347 while the linkage rod 134 moves along the first direction Z relative to the first support tube 132. The linkage rod 134 may also be provided with a drive hole 1346 through which the drive rod 142 may pass, and the drive hole 1346 extends in a direction intersecting with both the first direction Z and the second direction X, such that the drive rod 142 may slide within the drive hole 1346 in the extending direction of the linkage rod 134 while the drive rod 134 moves along the first direction Z relative to the first support tube 132, specifically, the drive rod 142 moves along the second direction X, while the clearance hole 1349 just provides a space where the drive rod 142 may move along the second direction X.

In some other embodiments, the limiting rod 141 may be fixedly connected to the positioning plug 143, and the engaging hook may rotate and swing around the limiting rod 141.

Along the first direction Z, one end of the linkage rod 134 is movably connected to the limiting rod 141, the drive rod 142, and the engaging hook 137, while the other end of the linkage rod 134 is movably connected to the two unlocking buttons 138. Specifically, the two unlocking buttons 138 are located at opposite sides of the linkage rod 134 in the third direction Y and are movable along the third direction Y relative to the linkage rod 134. The movement of the two unlocking buttons 138 along the third direction Y relative to the linkage rod 134 may drive the linkage rod 134 to move along the first direction Z relative to the first support tube 132.

More specifically, as shown in FIG. 3C, the end of the first support tube 132 away from the second support tube 131 is fixedly connected to the abutting shell 200. The linkage rod 134 extends into the abutting shell 200 along the first direction Z. The two unlocking buttons 138 are slidably connected to the abutting shell 200 along the third direction Y. The limiting rod 141, the drive rod 142, and the positioning plug 143 are disposed at an end of the linkage rod 134 away from the abutting shell 200 in the first direction Z. The end of the linkage rod 134 connected to the unlocking buttons 138 is provided with a tapered block 1340. The tapered block 1340 has a first inclined face 1341 on either side along the third direction Y, which is inclined relative to both the first direction Z and the third direction Y. Each unlocking button 138 has a block-like shape, and a side of each unlocking button 138 facing the linkage rod 134 has a second inclined surface 1381, which is parallel to the first inclined surface 1341. When the two unlocking buttons 138 are subjected to force and slide towards each other relative to the abutting shell 200 along the third direction Y, the sliding engagement between the second inclined surface 1381 and the first inclined surface 1341 causes the linkage rod 134 to move towards a side away from the second support tube 131 along the first direction Z, and furthermore, to drive the engaging hook 137 inside the first support tube 132 to rotate around the third direction Y to disengage from the engaging hole 1310 of the second support tube 131.

As shown in FIG. 3C, the elastic element 15 is disposed between the linkage rod 134 and the abutting shell 200 along the first direction Z, for driving the linkage rod 134 to move towards the first support tube 132 along the first direction Z, and then driving the engaging hook 137 inside the first support tube 132 to rotate around the third direction Y to engage with the engaging hole 1310 of the second support tube 131. Specifically, the elastic element 15 is a compression spring, which is located between the end of the linkage rod 134 away from the engaging hook 137 and the abutting shell 200 along the first direction Z. When the two unlocking buttons 138 are subjected to force and slide towards each other relative to the abutting shell 200 along the third direction Y, the linkage rod 134 compresses the compression spring. When the force applied to the two unlocking buttons 138 is released, the compression spring drives the linkage rod 134 to return to its original position.

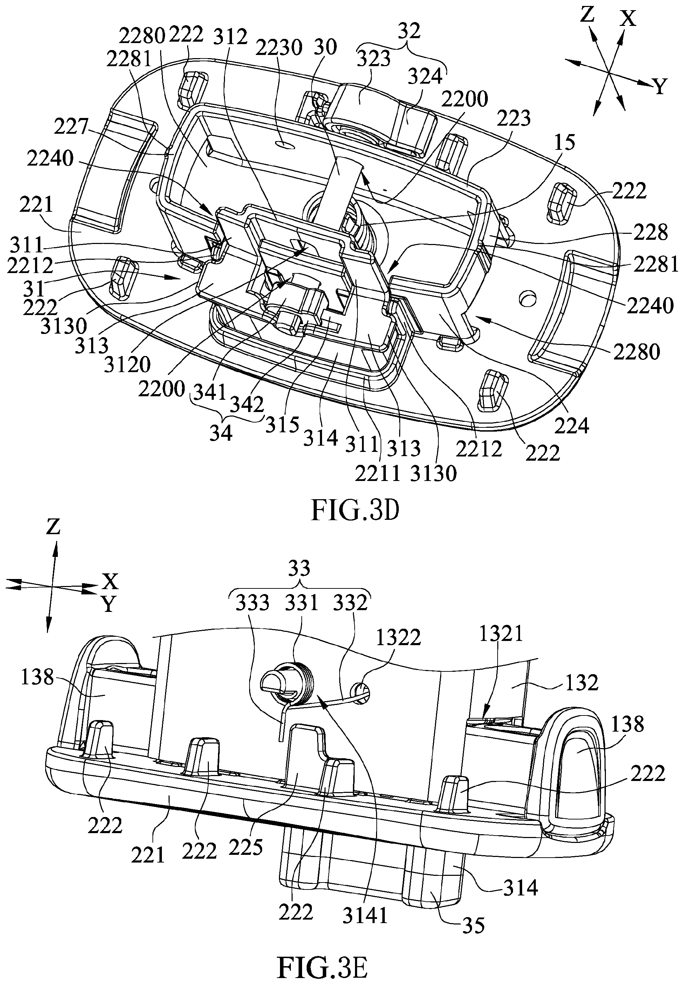

Referring to FIG. 3D to FIG. 3G, the pushing member 31 is located at a side of the linkage rod 134 along the second direction X, while the indication member 32 is on the other side of the linkage rod 134 along the second direction X. The transmission member 3 extends between the pushing member 31 and the indication member 32. The transmission member 3 is fixedly connected to the indication member 32 and is rotatable relative to the abutting shell 200, such that both the transmission member 3 and the indication member 32 rotate relative to the abutting shell 200. The pushing member 31 slides relative to the abutting shell 200 and slides towards the second position to drive the transmission member 3 and the indication member 32 to rotate together along a positive direction relative to the abutting shell 200.

Hereinafter, the structures of components of the contact indication structure of the support device according to the first embodiment of the present disclosure will be described in detail. A structure of the abutting shell 200 is introduced first.

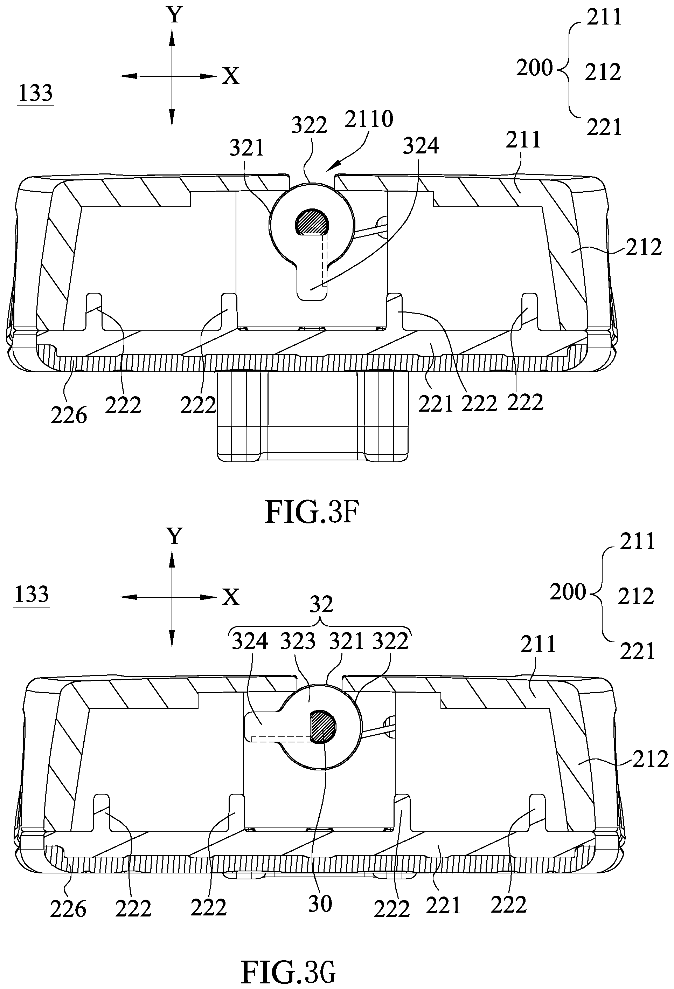

Referring to FIG. 3F and FIG. 3G, the abutting shell 200 of the contact indication structure 133 includes a top wall 211 and a bottom wall 221 that are arranged oppositely in the first direction Z, and a peripheral wall 212 that connects the top wall 211 and the bottom wall 221. The top wall 211 and the bottom wall 221 may have a rectangular-like shape. The top wall 211, the peripheral wall 212, and the bottom wall 221 together form an internal space. The top wall 211 is disposed close to the second support tube 131 while the bottom wall 221 is disposed away from the second support tube 131 and is used for abutting against the vehicle floor. Referring to FIG. 3C, the first support tube 132 and the linkage rod 134 extend through the top wall 211 along the first direction Z into the internal space of the abutting shell 200, and the elastic element 15 is disposed between the linkage rod 134 and the bottom wall 221. In this embodiment, the transmission member 3 and the indication member 32 are located inside the abutting shell 200, and the pushing member 31 is at least partially located inside the abutting shell 200.

Referring to FIG. 2A and FIG. 3F, the top wall 211 is provided with a through-hole 2110 or a transparent window, through which the first indication information 321 of the indication member 32 is exposed outside the contact indication structure 133 and can be observed by the user. The through-hole 2110 or transparent window is located at the same side of the linkage rod 134 as the indication member 32 in the second direction X and is arranged oppositely in the first direction Z.

Referring to FIG. 3F and FIG. 3G, the peripheral wall 212 and the top wall 211 form an upper cover of the contact indication structure 133, and correspondingly, the bottom wall 221 forms a lower cover of the contact indication structure 133. The peripheral wall 212 and the top wall 211 may be integrally formed. In some other embodiments, the peripheral wall 212 and the top wall 211 may also be connected by means of inlay connection, snap-fit connection, or other fixed connection methods.

Referring to FIG. 3D, FIG. 3E, and FIG. 3F, the peripheral wall 212 and the bottom wall 221 may be detachably connected. For example, a plurality of fixing columns 222 are formed on a surface of the bottom wall 221 close to the top wall 211 and close to an edge. These fixing columns 222 are distributed on two opposite sides of the bottom wall 221 along the second direction X. The peripheral wall 212 is connected to the bottom wall 221 in a tight fit with the plurality of fixing columns 222. In addition to fixing the upper cover, the fixing columns 222 also serve to strengthen the lower cover. Furthermore, the fixing columns 222 have a certain height in the first direction Z, which makes the connection between the upper cover and the lower cover more secure. At the same time, the fixing columns 222 at a certain height have a guiding function, to make the assembly of the upper cover and the lower cover smooth.

In some embodiments, an anti-slip layer 226 (see FIG. 3C) may also be provided on an end face of the bottom wall 221 away from the top wall 211. The anti-slip layer 226 may be made of rubber or other materials. The anti-slip layer 226 is mainly configured to increase the friction force when contacting the vehicle floor and also has a cushioning effect.

Referring to FIG. 3B and FIG. 3D, an installation chamber is disposed at a central of the bottom wall 221 of the abutting shell 200. The installation chamber includes a front wall 223 and a rear wall 224 that are arranged oppositely in the second direction X. An installation hole 2200 is disposed at a middle portion of either the front wall 223 or the rear wall 224, and the two installation holes 2200 are arranged oppositely along the second direction X. The bottom wall 221 of the abutting shell 200 is provided with a through-hole 2210 in which the pushing member 31 may slide, thereby realizing the sliding connection between the pushing member 31 and the abutting shell 200. A reinforcing rib 2211 is formed around the through-hole 2210 on the bottom wall 221.

Referring to FIG. 3B and FIG. 3C, in this embodiment, the installation chamber also includes a first U-shaped wall 227 and a second U-shaped wall 228 that are arranged oppositely in the third direction Y. The front wall 223, the rear wall 224, the first U-shaped wall 227, and the second U-shaped wall 228 together form a relatively enclosed installation chamber, which can enhance the structural strength. The installation chamber accommodates the tapered block 1340 of the linkage rod 134, and the tapered block 1340 may be movable along the first direction Z within the installation chamber. The first support tube 132 is sleeved onto the outside of the installation chamber.

Referring to FIG. 3B and FIG. 3D, the first U-shaped wall 227 and the second U-shaped wall 228 of the abutting shell 200 each have an opening 2280, and the two openings 2280 are arranged oppositely along the third direction Y and extend through the corresponding U-shaped wall along the third direction Y. Similarly, referring to FIG. 2A and FIG. 3C, the peripheral wall 212 of the abutting shell 200 is provided with two installation openings 2112 that are arranged oppositely along the third direction Y and extend through the peripheral wall 212 along the third direction Y. Referring to FIG. 3C and FIG. 3E, the first support tube 132 is provided with two penetration openings 1321 that are arranged oppositely along the third direction Y and penetrate through the first support tube 132 along the third direction Y. The two installation openings 2112, the two penetration openings 1321, and the two openings 2280 are aligned and interconnected along the third direction Y.

Referring to FIG. 3C, the unlocking button 138 extends through the installation opening 2112, the penetration opening 1321, and the opening 2280 in sequence from the outside of the abutting shell 200 into the installation chamber, and is linked with the tapered block 1340 of the linkage rod 134 within the installation chamber.

Referring to FIG. 3B and FIG. 3C, the unlocking button 138 has a penetration hole 1380 that extends through the unlocking button 138 in the first direction Z, and the penetration hole 1380 is a long hole extending along the third direction Y. The top wall 211 of the abutting shell 200 protrudes two fixing ribs 2111 at positions corresponding to the two penetration holes 1380 of the two unlocking buttons 138. A size of the fixing rib 2111 in the third direction Y is smaller than that of the penetration hole 1380, and the unlocking button 138 is slidably connected to the abutting shell 200 along the third direction Y through the fixing rib 2111. The above is just an example of a specific installation method of the unlocking button 138. In the present disclosure, the installation method of the unlocking button 138 may be diverse, as long as it may be slidably connected to the abutting shell 200 along the third direction Y, which will not be exhaustively listed here.

Referring to FIG. 3C, furthermore, the contact indication structure also includes two screws 16, which are configured to fixedly connect the bottom wall 221 and the two fixing ribs 2111 of the abutting shell 200, respectively. This can enhance the structural strength of the fixing ribs 2111. In long-term use, it can not only prevent the fixing ribs 2111 from being damaged by repeated impacts from the unlocking button 138 but also strengthen the connection strength between the upper cover and the lower cover of the abutting shell 200, which is beneficial for prolonging the service life of the contact indication structure.

Next, a structure of the pushing member 31 in this embodiment will be described in detail.

Referring to FIG. 3B and FIG. 3D, in the contact indication structure of this embodiment, when the support device is in the unfolded state, the pushing member 31 is located at the same side of the linkage rod 134 as the connecting member 150 in the second direction X (as shown in FIG. 1B).

The pushing member 31 slides relative to the abutting shell 200, for example, may slide along the first direction Z relative to the abutting shell 200 to be slidably connected to the abutting shell 200. The pushing member 31 is at least partially accommodated within the abutting shell 200 and protrudes from the abutting shell 200. Since the pushing member 31 is located at a side of the linkage rod 134 in the second direction X, it may not interfere with the linkage rod 134 even if the pushing member 31 moves in the same direction as the linkage rod 134.

Referring to FIG. 3D, the pushing member 31 includes a pushing part 314, a first limiting part, a second limiting part, a third limiting part, a fourth limiting part, and a fifth limiting part. When the pushing member 31 is in the first position, the pushing part 314 protrudes from the bottom wall 221 of the abutting shell 200 through the through-hole 2210 towards the side away from the top wall 211 along the first direction Z to abut against the vehicle floor. The first limiting part abuts against the bottom wall 221 along a vertical direction to prevent the pushing member 31 from disengaging from the abutting shell 200 towards the side away from the top wall 211 along the first direction Z. When the pushing member 31 is in the second position, the second limiting part and the third limiting part abut against the abutting shell 200 respectively along opposite directions in the second direction X to prevent the pushing member 31 from shaking in the second direction X. The fourth limiting part and the fifth limiting part abut against the abutting shell 200 along opposite directions in the third direction Y to prevent the pushing member 31 from shaking in the third direction Y.

Referring to FIG. 3D, as an example, the pushing member 31 may include two vertical arms 311, a connecting plate 312, two rear extension arms 313, and a downwardly extending pushing part 314. The two vertical arms 311 are spaced apart and arranged oppositely in the third direction Y.

The connecting plate 312 is connected to inner sides of the two vertical arms 311 opposite in the third direction Y. The connecting plate 312 protrudes towards the indication member 32 in the second direction X relative to the two vertical arms 311 and is configured in a U-shape. The two rear extension arms 313 are formed by respectively extending from the ends of the two vertical arms 311, which are provided away from the top wall 211 in the first direction Z, to the side away from the indication member 32 along the second direction X. The pushing part 314 is connected to the ends of the two rear extension arms 313, which are away from the top wall 211 in the first direction Z and protrudes towards the side away from the top wall 211. The pushing part 314 may be in the shape of a cylinder or a column.

Referring to FIG. 3E, a ground-contact member 35 may also be provided at the end of the pushing member 31 away from the top wall 211, that is, at the end of the pushing part 314 of the pushing member 31 away from the top wall 211. The ground-contact member 35 may be made of a material with a cushioning effect, such as rubber.

Referring to FIG. 3D, the connecting plate 312, the two rear extension arms 313, and the pushing part 314 together form a driving cavity 3121. The rear extension arm 313 is provided with, or integrally formed with, a fitting part 315. In some other embodiments, the fitting part 315 may also be connected to the pushing part 314.

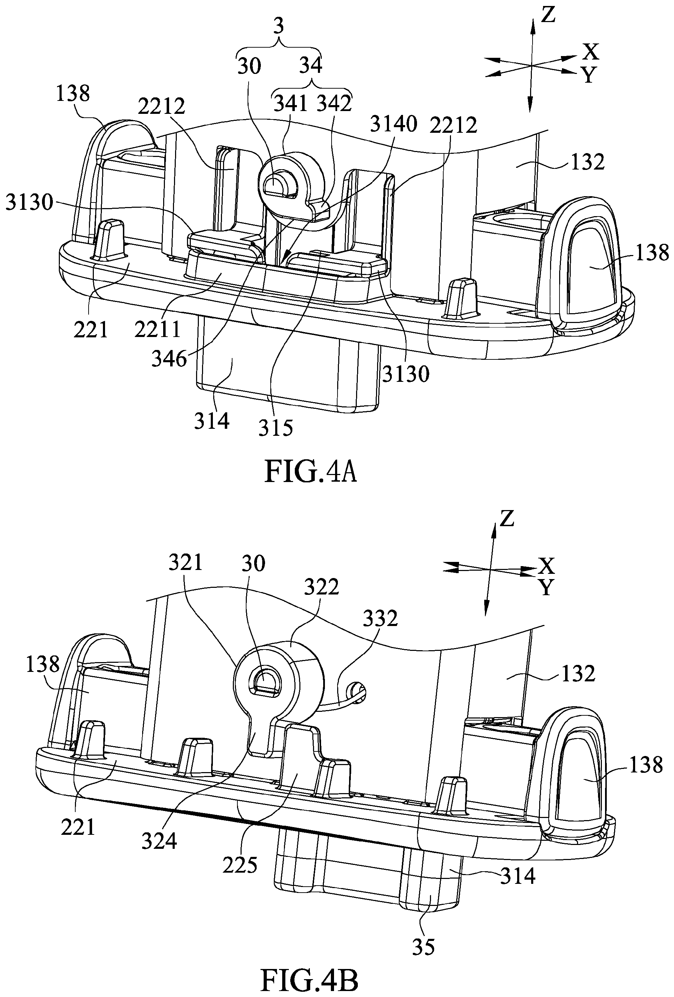

Referring to FIG. 3D and FIG. 4A, in some embodiments, two notches 2240 are provided on the rear wall 224 of the installation chamber. The two notches 2240 are symmetrically arranged with respect to the installation hole 2200 on the rear wall 224 in the third direction Y. The two vertical arms 311 of the pushing member 31 may be respectively disposed in the two notches 2240. The connecting plate 312 surrounds the rear wall 224 between the two notches 2240 and is located between the front wall 223 and the rear wall 224 in the second direction X. The rear extension arms 313 and the pushing part 314 are disposed on a side of the vertical arms 311 away from the front wall 223 in the second direction X, protrudes outwardly from the first support tube 132. The rear extension arms 313 and the first support tube 132 are partially opposite to each other in the first direction Z, such that the first support tube 132 also provides a space wherein the rear extension arms 313 may slide along the first direction Z, while the pushing part 314 is at least partially accommodated within the through-hole 2210. In this way, the pushing member 31 is installed within the abutting shell 200.

Referring to FIG. 3B and FIG. 3D, the two rear extension arms 313 respectively protrude away from each other in the third direction Y to form protrusions 3130. Projections of the protrusions 3130 on the bottom wall 221 along the first direction Z is located outside the through-hole 2210 and is opposite to the reinforcing rib 2211 along the first direction Z. When the pushing member 31 slides downward to the first position, the protrusions 3130 abut against the reinforcing rib 2211 on the bottom wall 221 along the first direction Z. A surface of the protrusion 3130 that abuts against the bottom wall 221 is the first limiting part.

Referring to FIG. 3B, the bottom wall 221 is also provided with two limiting columns 2212. The two limiting columns 2212 are located at opposite sides of the through-hole 2210 in the third direction Y and protrude from the rear wall 224 towards the side away from the front wall 223 along the second direction X, and protrude out of the first support tube 132. A surface of the protrusion 3130 that is close to the front wall 223 in the second direction X contacts and matches with the limiting column 2212. The contact and match between the protrusion 3130 and the limiting column 2212, on the one hand, restricts the movement of the pushing member 31 towards the front wall 223, and on the other hand, makes the sliding of the pushing member 31 smoother, that is, the limiting column 2212 serves as a guiding function. The surface of the protrusion 3130 that abuts against the limiting column 2212 is the second limiting part. In addition, the rear wall 224 is accommodated in a space formed by the U-shaped connecting plate 312 to guide the pushing member 31 to slide along the first direction Z, while the surface of the connecting plate 312 in the second direction X may contact and match with the rear wall 224 to restrict the movement of the pushing member 31 towards the side away from the front wall 223 in the second direction X during a sliding process along the first direction Z and when being in the second position. That is to say, the surface of the connecting plate 312 that abuts against the rear wall 224 is the third limiting part.

Referring to FIG. 3D, the two vertical arms 311 are located in the two notches 2240. Each vertical arm 311 may abut against the two opposite surfaces of the corresponding notch 2240 in the third direction Y along opposite directions in the third direction Y, to restrict the shaking of the pushing member 31 in the third direction Y during the sliding process along the first direction Z and when it is in the second position. At the same time, the two rear extension arms 313 may also abut against the adjacent limiting columns 2212 along opposite directions in the third direction Y, to restrict the shaking of the pushing member 31 in the third direction Y during the sliding process along the first direction Z and when it is in the second position. That is to say, the two surfaces of each vertical arm 311 that abut against the two opposite surfaces of the corresponding notches 2240 in the third direction Y along opposite directions in the third direction Y are the fourth and fifth limiting parts, respectively. At the same time, the two rear extension arms 313 that abut against the two surfaces of the adjacent limiting columns 2212 along opposite directions in the third direction Y are the fourth and fifth limiting parts. In some other embodiments, these two types of fourth and fifth limiting parts do not have to exist at the same time, and one of them may be selected.

Next, a structure of the transmission member 3 in this embodiment will be described in detail.

Referring to FIG. 3D and FIG. 4A, the transmission member 3 is rotatable relative to the abutting shell 200, for example, the transmission member 3 is pivotally connected to the abutting shell 200 around the second direction X. In this embodiment, the transmission member 3 includes a rotating shaft 30 and an abutting part 34.

The rotating shaft 30 extends along the second direction X and is pivotally connected to the abutting shell 200. Referring to FIG. 3D, for example, the rotating shaft 30 may be rotatably disposed within the two installation holes 2200 around the second direction X, but not move relative to the abutting shell 200 in the first direction Z, the second direction X, and the third direction Y.

Referring to FIG. 3D, during the sliding process of the pushing member 31, since the connecting plate 312 is always located between the front wall 223 and the rear wall 224 and faces to the installation hole 2200 on the front wall 223 and the installation hole 2200 on the rear wall 224, the connecting plate 312 is provided with a passage hole 3120, through which the rotating shaft 30 may pass. Since the pushing member 31 moves relative to the rotating shaft 30 along the first direction Z, the passage hole 3120 extends along the first direction Z, such that the rotating shaft 30 may slide within the passage hole 3120 when the pushing member 31 moves along the first direction Z relative to the rotating shaft 30. At the same time, since the pushing member 31 moves to the second position along the first direction Z, the pushing part 314 may interfere with the rotating shaft 30 in the first direction Z. Therefore, the pushing part 314 is provided with a slot 3140 for avoiding the rotating shaft 30 (see FIG. 4A).

In some other embodiments, the passage hole 3120 is not necessary. For example, if the pushing member 31 does not include the connecting plate 312, or if the connecting plate 312 does not have parts that are opposite to the installation holes 2200 on the front wall 223 and the rear wall 224 during the sliding process of the pushing member 31, that is, if there is no movement interference between the connecting plate 312 and the rotating shaft 30, the passage hole 3120 may not be required. Similarly, if there is no movement interference between the pushing part 314 and the rotating shaft 30, the slot 3140 may also be omitted.

Referring to FIG. 3A, FIG. 3D, and FIG. 3E, the rotating shaft 30 extends through the front wall 223, the rear wall 224, and the first support tube 132 along the second direction X, such that the two ends of the rotating shaft 30 in the second direction X are exposed from the first support tube 132 and accommodated within the abutting shell 200. Since the rotating shaft 30 does not move relative to the first support tube 132 in the first direction Z, the second direction X, and the third direction Y, but only rotates around the second direction X relative to the first support tube 132, the first support tube 132 and the abutting shell 200 may be fixedly connected together through the rotating shaft 30 without separation. The first support tube 132 is provided with a through-hole 3141 through which the rotating shaft 30 may pass.

Referring to FIG. 3D and FIG. 3E, specifically, the outer surfaces of the first U-shaped wall 227 and the second U-shaped wall 228 of the installation chamber protrude towards the first support tube 132 to form protruding ribs 2281. Since there is a gap between the first support tube 132 and the installation chamber, a protruding length of the protruding rib 2281 is greater than a gap between the first support tube 132 and the installation chamber. This can reduce the shaking of the first support tube 132 relative to the abutting shell 200. Certainly, in some other embodiments, the front wall 223 and the rear wall 224 may also protrude towards the first support tube 132 to form protruding ribs 2281.

During the sliding process of the pushing member 31, since the linkage rod 134 always has parts that are located between the front wall 223 and the rear wall 224 and are opposite to the installation hole 2200 on the front wall 223 and the installation hole 2200 of the rear wall 224, the linkage rod 134 is also provided with an avoidance hole 1345 through which the rotating shaft 30 may pass, see FIG. 3C for details. Since the linkage rod 134 moves along the first direction Z relative to the rotating shaft 30, the avoidance hole 1345 extends along the first direction Z, such that the rotating shaft 30 may slide within the avoidance hole 1345 when the linkage rod 134 moves along the first direction Z relative to the rotating shaft 30. Thus, the linkage rod 134 is slidably connected to the abutting shell 200 through the rotating shaft 30.

The abutting part 34 and the pushing member 31 are located at the same side of the linkage rod 134 in the second direction X. As shown in FIG. 3B, and FIG. 3D, the abutting part 34 is also located at the side of the rear wall 224 away from the front wall 223 in the second direction X, that is, outside the installation chamber and on the outside of the first support tube 132. The abutting part 34 may also be integrally formed with the rotating shaft 30.

In this embodiment, referring to FIG. 3D, and FIG. 4A, the abutting part 34 is fixed to the end of the rotating shaft 30 away from the indication member 32. When the support device is in the non-ground-contact state, that is, when the pushing member 31 is in the first position, the abutting part 34 is opposed to at least part of the pushing member 31 in the first direction Z, such that the pushing member may abut against the abutting part 34 while sliding towards the second position along the first direction Z, to drive the abutting part 34 and the rotating shaft 30 to rotate together around the second direction X along the positive direction, that is, drive the transmission member 3 as a whole to rotate around the second direction X along the positive direction. When the pushing member 31 is in the second position, the abutting part 34 may be located within the driving cavity 3121 of the pushing member 31.

In this embodiment, referring to FIG. 3D, the indication member 32 is fixed to the end of the rotating shaft 30 away from the abutting part 34, such that the rotating shaft 30 may rotate and drive the rotation of the indication member 32. The abutting part 34 and the rotating shaft 30 may also be an integral structure. The indication member 32 is also located at the side of the front wall 223 away from the rear wall 224 in the second direction X, that is, outside the installation chamber, and on the outside of the first support tube 132. The indication member 32 is arranged opposite to the through-hole 2110 or transparent window along the first direction Z. Therefore, through the rotation of the indication member 32, the first indication information 321 or the second indication information part 322 may be selectively displayed in the through-hole 2110 or transparent window to be exposed from the abutting shell 200.

Referring to FIG. 4A, in some embodiments, the abutting part 34 may include a fixing portion 341 and an extension portion 342. The fixing portion 341 is sleeved onto the rotating shaft 30 and is fixedly connected to the rotating shaft 30. The extension portion 342 extends outward from the fixing portion 341. Specifically, when the pushing member 31 is in the first position, the extension portion 342 is opposed to the fitting part 315 of the pushing member 31 along the first direction Z to cooperate with the fitting part 315. When the pushing member 31 slides towards the second position along the first direction Z (specifically, when the pushing member 31 slides towards the second support tube 131 along the first direction Z), the fitting part 315 of the pushing member 31 rotates the abutting part 34 in the positive direction, to drive the rotating shaft 30 to rotate around the second direction X along the positive direction.

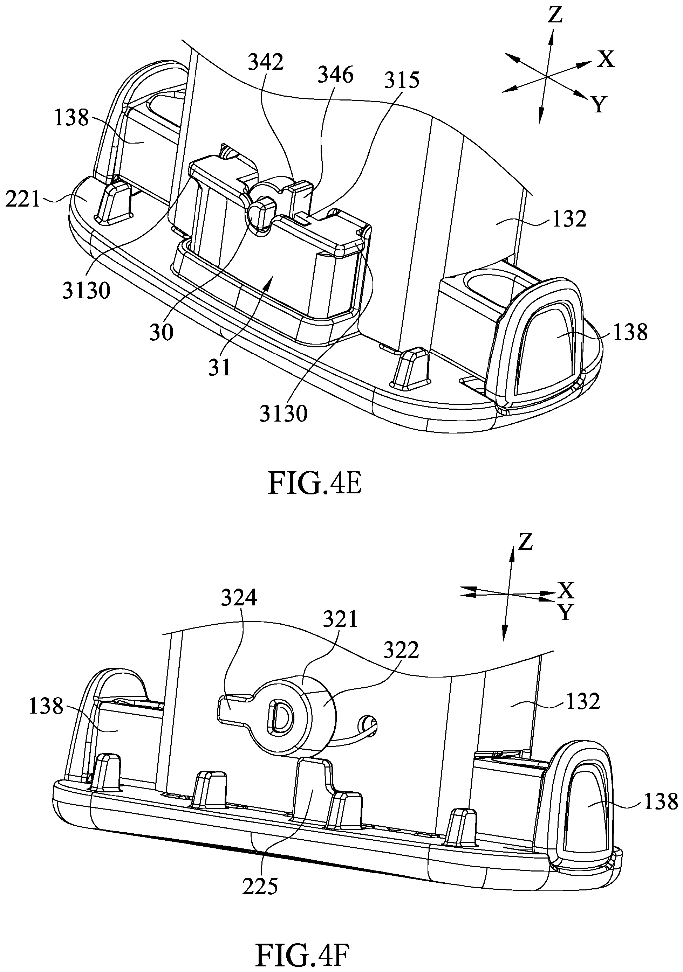

In some embodiments, the abutting part 34 has an abutting plane 346 (see FIG. 4A). The abutting plane 346 remains parallel to the second direction X during the rotation of the transmission member 3. A part of the abutting plane 346 is located at the fixing portion 341, and another part of the abutting plane 346 is located at the extension portion 342. The abutting plane 346 cooperates with the fitting part 315 of the pushing member 31. That is, when the pushing member 31 slides towards the second position along the first direction Z, the fitting part 315 of the pushing member 31 may abut against this abutting plane 346 and slide along the abutting plane 316 to drive the extension portion 342 to rotate around the second direction X in the positive direction. When the pushing member 31 is in the first position, the abutting plane 346 on the extension portion 342 is opposed to the fitting part 315 along the first direction Z and is perpendicular to the sliding direction of the pushing member 31 (i.e., the first direction Z) (see FIG. 4A), such that the pushing member 31 may effectively drive the abutting part 34 to rotate around the second direction X in the positive direction. During the process of the pushing member 31 sliding from the first position to the second position, the fitting part 315 slides from the abutting plane 346 on the extension portion 342 to the abutting plane 346 on the fixing portion 341 along the extension direction of the abutting plane 346. When the pushing member 31 is in the second position, the abutting plane 346 on the fixing portion 341 is opposed to the fitting part 315 along the third direction Y and is parallel to the sliding direction of the pushing member 31 (see FIG. 4E).

In the first embodiment of the support device of the present disclosure, the contact indication structure also includes a first reset member for driving the transmission member 3 to rotate around the second direction X along a reverse direction (opposite to the positive direction) relative to the abutting shell 200. The first reset member is located between the indication member 32 and the abutting shell 200 or between the drive portion 34 and the abutting shell 200. When the support device is in the ground-contact state, the first reset member drives the transmission member 3 and the indication member 32 to rotate along the reverse direction and drives the pushing member 31 to slide along the first direction Z towards the first position to protrude from the abutting shell 200, such that the first indication information 321 is hidden within the abutting shell 200 and the second indication information part 322 is displayed in the through-hole 2110 or transparent window.

Referring to FIG. 3E, FIG. 3F, and FIG. 3G, in this embodiment, the first reset member is a torsion spring 33 installed on the rotating shaft 30. The torsion spring 33 includes a spiral body 331 and a first lead-out end 332 and a second lead-out end 333 connected to the spiral body 331.

In this embodiment, the spiral body 331 of the torsion spring 33 is located at the same side of the front wall 223 as the indication member 32 in the second direction X and is located at the outside of the first support tube 132. The spiral body 331 of the torsion spring 33 is sleeved onto the rotating shaft 30. The second lead-out end 333 of the torsion spring 33 is connected to the indication member 32, and the first lead-out end 332 of the torsion spring 33 passes through the first support tube 132 and is connected to the abutting shell 200 of the contact indication structure 133, specifically to the front wall 223.

The first lead-out end 332 of the torsion spring 33 is connected to the abutting shell 200 in various manners. For example, referring to FIG. 3D and FIG. 3E, the front wall 223 of the installation chamber of the abutting shell 200 is provided with a hanging hole 2230, and the first lead-out end 332 may hang from the hanging hole 2230. The first support tube 132 has a perforation 1322 corresponding to a position where the hanging hole 2230 is provided, and the first lead-out end 332 of the torsion spring 33 may pass through the perforation 3140 and be hanged onto the hanging hole 2230. In some other embodiments, a hook to which the first lead-out end 332 may be hooked may be provided on the front wall 223 of the installation chamber of the abutting shell 200 or on the first support tube 132.

The second lead-out end 333 of the torsion spring 33 may be connected to the indication member 32 in various manners. For example, referring to FIG. 3E and FIG. 3F, the indication member 32 is fixedly sleeved over the outside of the rotating shaft 30, and the indication member 32 is hollow internally. The spiral body 331 of the torsion spring 33 is located inside the hollow indication member 32 covered by the indication member 32, and the second lead-out end 333 of the torsion spring 33 abuts against an inner side of the indication member 32.

In addition, the torsion spring 33 may also be installed between the drive portion 34 and the abutting shell 200. The specific way of connecting the first lead-out end 332 to the abutting shell 200 is similar to described above, and the specific way of connecting the second lead-out end 333 to the drive portion 34 is similar to the specific way of connecting the second lead-out end 333 to the indication member 32, which will not be repeated here.

Next, a structure of the indication member 32 in this embodiment will be described in detail.

As shown in FIG. 3D, FIG. 3F and FIG. 3G, in some embodiments, the indication member 32 includes a connecting part 323 in a cylindrical shape and a limiting part 324 extending outward from the connecting part 323. The connecting part 323 is fixed to the rotating shaft 30 and covers the spiral body 331 of the torsion spring 33.

The first indication information 321 is provided on an outer surface of the connecting part 323. Furthermore, the outer surface of the connecting part 323 is also provided with the second indication information part 322. The second indication information part 322 is arranged adjacent to the first indication information 321.

Referring to FIG. 3G, when the support device is in the ground-contact state, the first indication information 321 is exposed outside and can be observed by the user, while the second indication information part 322 is hidden. Referring to FIG. 3F, when the support device is in the non-ground-contact state, the second indication information part 322 is exposed outside and can be observed by the user, while the first indication information 321 is hidden. The first indication information 321 and the second indication information part 322 may be colored differently, for example, the first indication information 321 may be green, and the second indication information part 322 may be red. In some other embodiments, the first indication information 321 and the second indication information part 322 may also be with different structures, patterns, etc., as long as they are distinguishable.

In this embodiment, the abutting shell 200 includes a blocking part 225 located at a side of the limiting part 324 along the reverse direction. When the pushing member 31 is in the first position, the limiting part 324 abuts against the blocking part 225 to prevent the transmission member 3 and the indication member 32 from rotating together relative to the abutting shell 200 along the reverse direction, to ensure that the torsion spring 33 applies a reverse rotational force to the transmission member 3 and the indication member 32, and prevent the second indication information part (safety warning information part) from moving away from the through-hole 2110 or transparent window to be hidden within the abutting shell 200, that is, to ensure that the first indication information (safety indication information part) 321 is hidden within the contact indication structure 133.

Referring to FIG. 3E, the blocking part 225 protrudes upward from the bottom wall 221 of the abutting shell 200 towards the top wall 211 and is configured close to the indication member 32, and integrally formed with one of the fixing columns 222.

In the first embodiment of the support device of the present disclosure, the contact indication structure also includes a second reset member located between the pushing member 31 and the abutting shell 200, to drive the pushing member 31 to slide towards the first position along the first direction Z.

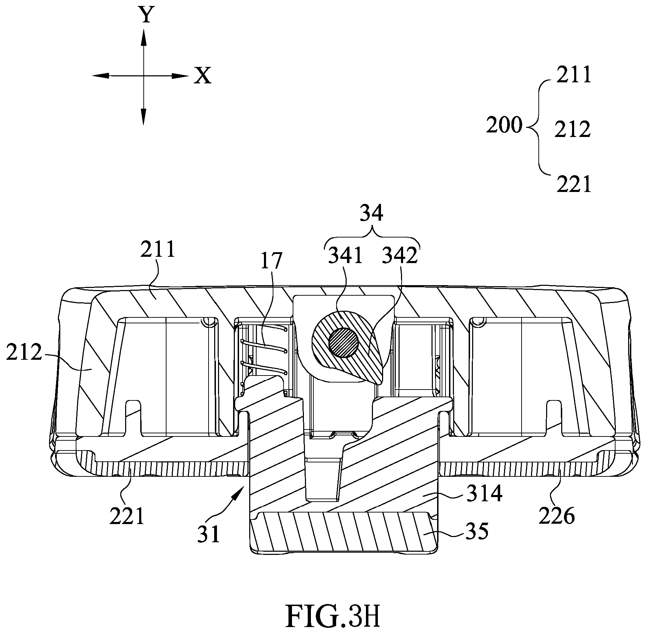

As shown in FIG. 3H, the second reset member is a compression spring 17. The compression spring 17 is disposed between the top wall 211 of the abutting shell 200 and the pushing member 31 to drive the pushing member 31 to slide towards the first position. That is to say, when the pushing member 31 is in the first position, the compression spring 17 ensures the pushing part 314 of the pushing member 31 to protrude from the bottom wall 221 of the contact indication structure 133.

Since the pushing member 31, when being in the first position, is spaced apart from the abutting part 34 in the first direction Z, that is, after the abutting part 34 rotates in the reverse direction around the second direction X due to the torsion spring 33 such that the abutting plane 346 is parallel to the fitting part 315, the abutting part 34 may not apply a force, to drive the pushing member 31 move towards the first position along the first direction Z, on the pushing member 31. At this time, the second reset member may drive the pushing member 31 to move to the first position. Certainly, in some other embodiments, the second reset member may not be provided, and the pushing member 31 may be moved to the first position only by the first reset member and the gravity of the pushing member 31 itself.

Referring to FIG. 4A to FIG. 4F, FIG. 4A to FIG. 4F show the transition process of the support device according to the first embodiment of the present disclosure from the non-ground-contact state to the ground-contact state.

When the support device is in the non-ground-contact state, the state of the pushing member 31 is shown in FIG. 4A and FIG. 4B. The pushing part 314 of the pushing member 31 protrudes from the bottom wall 221 of the contact indication structure 133, and there is a distance between the pushing part 314 of the pushing member 31 and the abutting part 34 in the first direction Z, that is, the fitting part 315 of the pushing member 31 is not in contact with the abutting plane 346 of the abutting part 34. At this time, the pushing member 31 is in the first position, and at least one of the first, second, and third limiting parts of the pushing member 31 and at least one of the fourth and fifth limiting parts may abut against the abutting shell 200 to restrict the shaking of the pushing member 31 in the first direction Z, the second direction X, and the third direction Y.

When the support device is in the non-ground-contact state, the state of the indication member 32 is shown in FIG. 4B. The limiting part 324 of the indication member 32 abuts against the blocking part 225 on the bottom wall 221, and the second indication information part 322 on the indication member 32 is exposed outside the contact indication structure 133, that is, the second indication information part 322 corresponds to the through-hole 2110 or transparent window of the upper cover (see FIG. 3F).

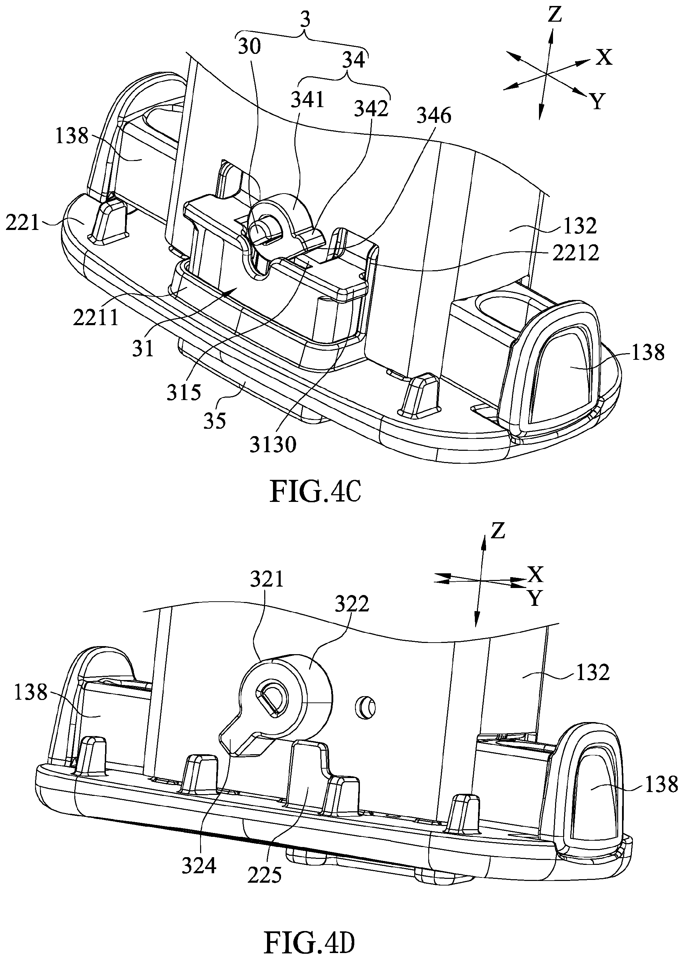

When the support device is in the intermediate state from the non-ground-contact state to the ground-contact state, the state of the pushing member 31 is shown in FIG. 4C. Under the action of an external force applied to the top wall 211 by the vehicle floor along the first direction Z, the distance between the pushing member 31 and the abutting part 34 in the first direction Z gradually decreases until the fitting part 315 of the pushing member 31 abuts against the abutting plane 346, to drive the rotation of the abutting part 34. As shown in FIG. 4C, the abutting part 34 rotates around the second direction X along the positive direction through an angle, driving the rotating shaft 30 and the indication member 32 to rotate by the same angle. During the process of the pushing member 31 sliding towards the second position along the first direction Z, at least one of the second and third limiting parts of the pushing member 31 and at least one of the fourth and fifth limiting parts may abut against the abutting shell 200 to restrict the shaking of the pushing member 31 in the second direction X and the third direction Y. The contact cooperation between the limiting column 2212 on the bottom wall 221 and the pushing member 31 and the contact cooperation between the rear wall 224 located between the two notches 2240 and the connecting plate 312 may perform a guiding function.

When the support device is in the intermediate state from the non-ground-contact state to the ground-contact state, the state of the indication member 32 is shown in FIG. 4D. Driven by the rotating shaft 30, the limiting part 324 of the indication member 32 disengages from the blocking part 225 and continues to rotate around the second direction X along the positive direction, such that the second indication information part 322 on the indication member 32 may be gradually hidden within the abutting shell 200, while the first indication information 321 may be gradually exposed from the abutting shell 200.

When the support device is in the ground-contact state, the state of the pushing member 31 is shown in FIG. 4E. The bottom wall 221 of the contact indication structure 133 abuts against the vehicle floor (that is, the support device is fully supported on the vehicle floor). The fitting part 315 of the pushing member 31 abuts against the abutting plane 346 along the third direction Y. At this time, the pushing member 31 is in the second position, and at least one of the second and third limiting part and at least one of the fourth and fifth limiting parts abut against the abutting shell 200 to restrict the shaking of the pushing member 31 in the second direction X and the third direction Y.

When the support device is in the ground-contact state, the state of the indication member 32 is shown in FIG. 4F. Driven by the rotating shaft 30, the indication member 32 rotates to expose the first indication information 321 on the indication member 32 outside the abutting shell 200 and the second indication information part 322 is hidden within the abutting shell 200, as shown in FIG.3G and FIG. 4D.

### The Second Embodiment of The Support Device

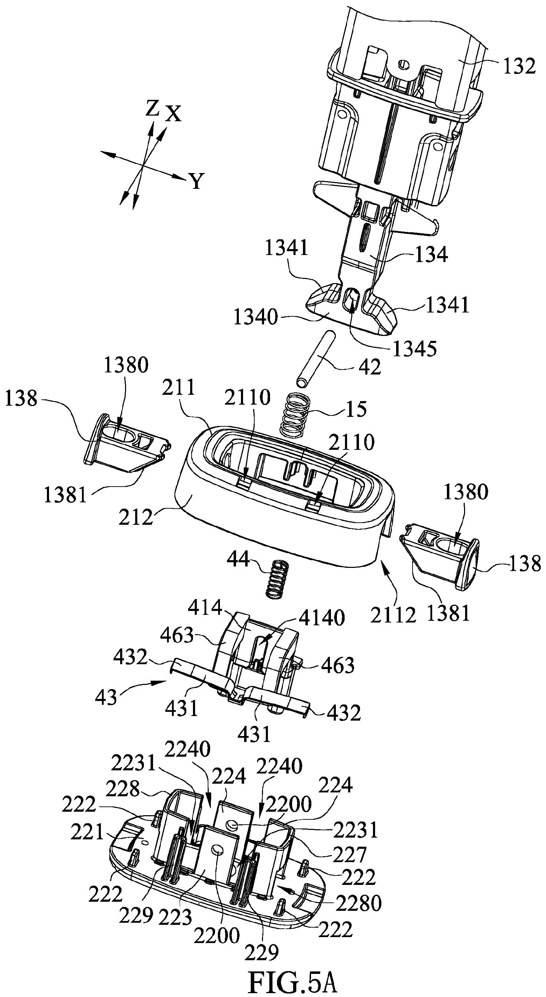

Referring to FIG. 5A to FIG. 5F, the support device according to the second embodiment of the present disclosure includes a support tube 130, an adjustment structure, and a contact indication structure 133.

The support tube 130 and the adjustment structure are the same as those of the support device according to the first embodiment of the present disclosure, which will not be repeated here.

The contact indication structure 133 includes an abutting shell 200, an indication member 43, a transmission member 46, and a pushing member 41, all of which are fixedly connected. The pushing member 41 slides relative to the abutting shell 200 along the first direction Z, to drive the transmission member 46 and the indication member 43 to slide together relative to the abutting shell 200. The indication member may be deformed relative to the abutting shell 200.

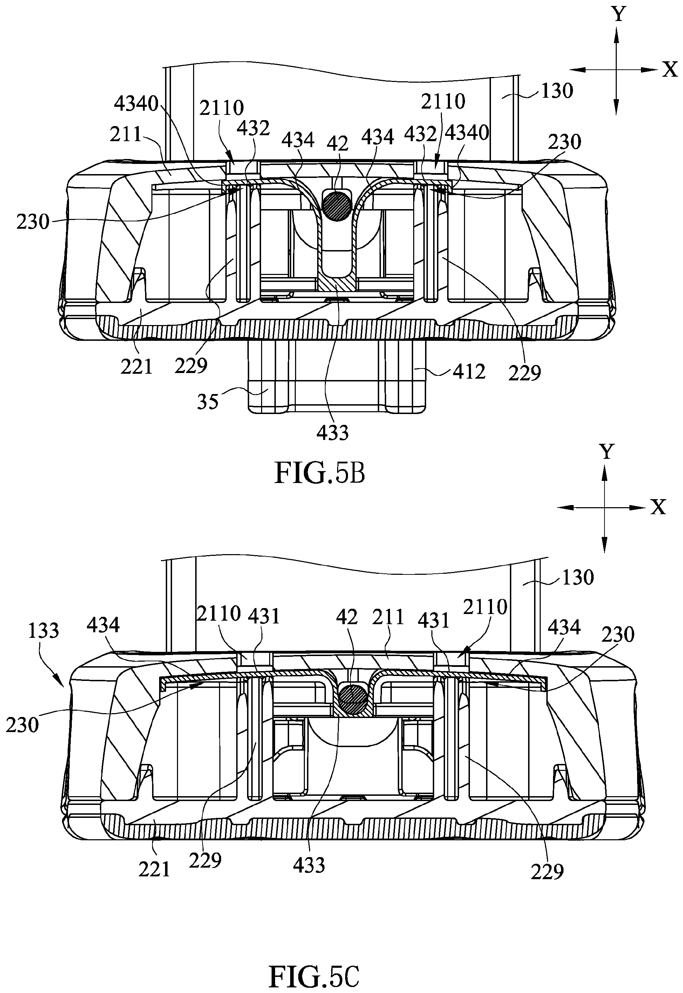

Referring to FIG. 5A and FIG. 5B, in the second embodiment of the support device of the present disclosure, the structures of the upper cover and the lower cover of the abutting shell 200 are essentially the same as those in the first embodiment, with slight structural differences in of the top wall 211: the top wall 211 is provided with two through-holes 2110 or transparent windows that are spaced apart along the third direction Y; with slight structural differences in of the installation chamber on the bottom wall 221: the front wall 223 of the installation chamber is provided with two notches 2231, which may correspond to the two notches 2240 on the rear wall 224 along the second direction X one by one.

Referring to FIG. 5A, the bottom wall 221 of the abutting shell 200 is provided with two guiding columns 229 that are spaced apart along the third direction Y. The guiding columns 229 extend along the first direction Z and are located at a side of the front wall 223 away from the rear wall 224 in the second direction X, and outside the first support tube 132. The two guiding columns 229 are respectively disposed adjacent to the two notches 2231 on the front wall 223 correspondingly.

As shown in FIG. 5B, there is a gap between the top end of each guiding column 229 and the top wall 211 of the abutting shell 200. The two gaps form part of two sliding channels 230, which extend along the third direction Y and along the inner surface of the top wall 211.

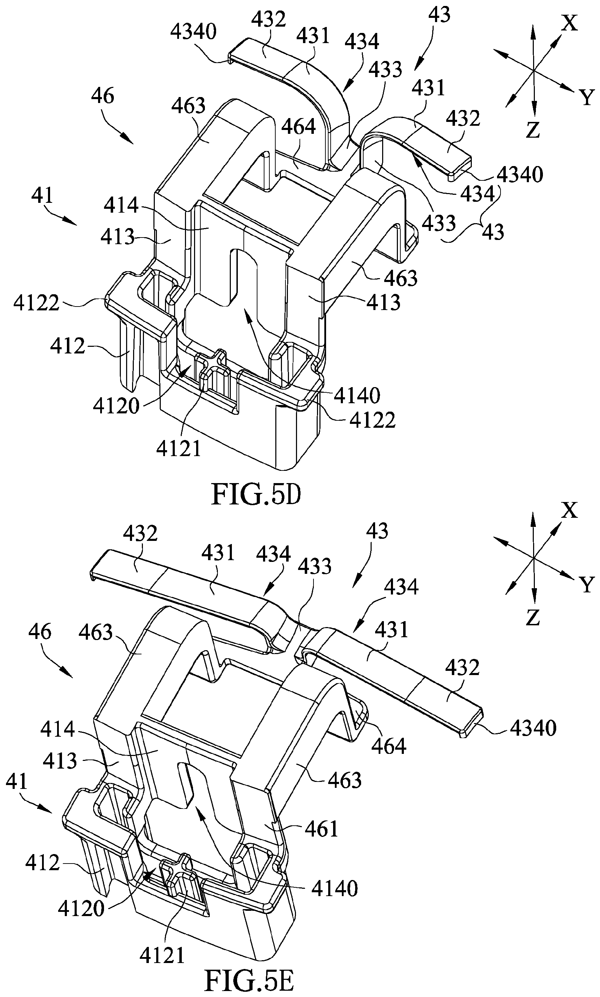

Referring to FIG. 5D and FIG. 5E, as an example, the pushing member 41 may include two vertical arms 413 arranged oppositely along the third direction Y, a rear connecting plate 414 connecting the two vertical arms 413, a pushing part 412, and two protrusions 4122. The pushing part 412 may be in the shape of a cylinder or a column and slide relative to the abutting shell 200 along the first direction Z. The two protrusions 4122 are respectively formed by protruding outward in opposite directions along the third direction Y from the surface of the pushing part 412 close to the top wall 211. The two vertical arms 413 are respectively formed by extending from the surface of the pushing part 412 close to the top wall 211 towards the top wall 211 on the two sides in the third direction Y.

Referring to FIG. 5D and FIG. 5E, as an example, the transmission member 46 includes two transmission arms 463 in an L shape and a front connecting plate 464. The two transmission arms 463 are respectively extended from the two vertical arms 413 towards a side away from the pushing part 412. It can be seen that the two transmission arms 463 are also spaced apart along the third direction Y. The front connecting plate 464 is connected between the two ends of the transmission arms 463 away from the vertical arms 413, that is, the front connecting plate 464 extends along the third direction Y. Specifically, the transmission arm 463 in the L shape includes a portion that extends along the second direction X and a portion that extends along the first direction Z.

Referring to FIG. 5D and FIG. 5E, the indication member 43 includes a connecting part 433 that is connected to the transmission member 46 and two elastic arms 434 extending from the connecting part 433. The two elastic arms 434 are spaced apart along the third direction Y and are symmetrically arranged relative to the first direction Z. Specifically, the connecting part 433 is connected to a middle portion of the front connecting plate 464 in the third direction Y. The two elastic arms 434 extend from the connecting part 433 along opposite directions in the third direction Y. Each elastic arm 434 includes a portion that extends along the third direction Y and a portion that is bent relative to the third direction Y and the first direction Z.

As shown in FIG. 5D, when the support device is in the non-ground-contact state, the portion of the elastic arm 434 that extends along the third direction Y is relatively short, and the portion that is bent relative to the third direction Y and the first direction Z is relatively long. As shown in FIG. 5E, when the support device is in the ground-contact state, the portion of the elastic arm 434 that extends along the third direction Y is relatively long, and the portion that is bent relative to the third direction Y and the first direction Z is relatively short.

Referring to FIG. 5B and FIG. 5C, the two elastic arms 434 of the indication member 43 are respectively located within the two sliding channels 230 of the abutting shell 200. The two elastic arms 434 may be deformed along the third direction Y, that is, to be deformed by elastically extending away from each other along the third direction or to be restored by elastically retracting in a direction towards each other. As shown in FIG. 5B, the free end of each elastic arm 434 is provided with an engaging part 4340. When the support device is in the non-ground-contact state, the engaging part 4340 of the elastic arm 434 may be engaged on the side of the guiding column 229 away from the other guiding column 229 along the third direction Y to prevent the elastic arm 434 from disengaging from the corresponding sliding channel 230.

The surface of each elastic arm 434 close to the top wall 211 is provided with the first indication information 431. Furthermore, the surface of each elastic arm 434 close to the top wall 211 is also provided with the second indication information part 432. The two elastic arms 434 are respectively disposed opposite to the two through-holes 2110 or transparent windows along the first direction Z.

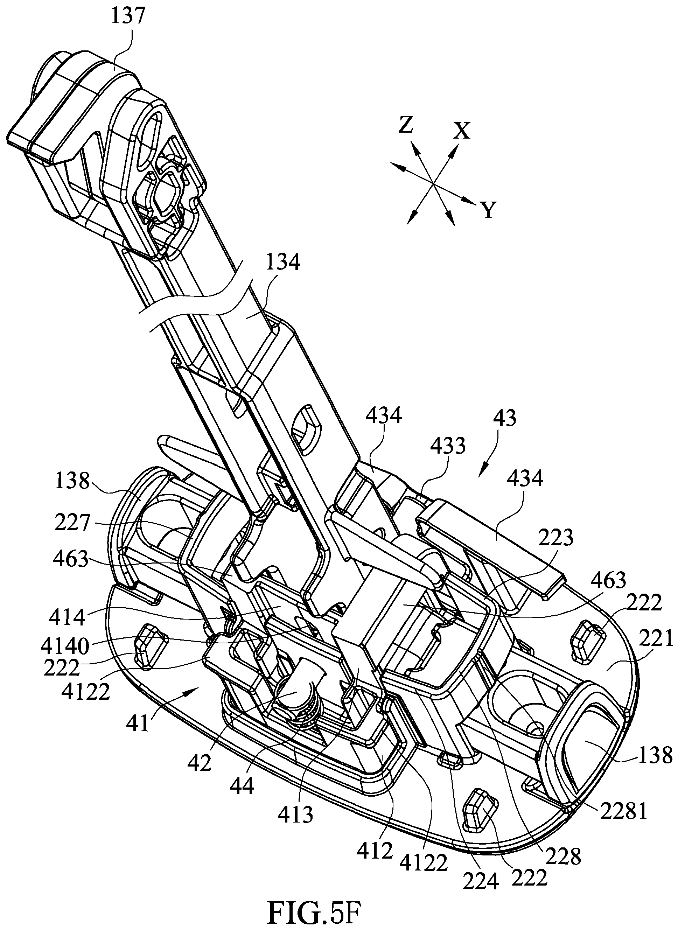

Referring to FIG. 5A and FIG. 5F, the two transmission arms 463 of the transmission member 46 are respectively located at opposite sides of the linkage rod 134 along the third direction Y. The two vertical arms 413 of the pushing member 41 are located in the two notches 2240 of the rear wall 224 of the installation chamber. The rear connecting plate 414 of the pushing member 41 is located at the side of the rear wall 224 near the front connecting plate 464 in the second direction X, while the portions of the two transmission arms 463 of the transmission member 46 extending along the first direction Z are disposed in the two notches 2231 of the front wall 223 of the installation chamber.

Referring to FIG. 5A and FIG. 5F, the contact indication structure 133 in this embodiment may also include a fixing shaft 42 and a second reset member 44. The fixing shaft 42 is the same as the rotating shaft 30 in the first embodiment, which will not be described again. Since the pushing member 41 does not drive the fixing shaft 42 to rotate, even if the fixing shaft 42 may rotate relative to the abutting shell 200, the fixing shaft 42 may not rotate relative to the abutting shell 200 because there is no corresponding element to drive the rotation of the fixing shaft 42. In some other embodiments, the fixing shaft 42 may also be fixedly connected to the abutting shell 200.

Referring to FIG. 5A and FIG. 5F, the second reset member 44 is disposed between the fixing shaft 42 and the pushing member 41. The second reset member 44 may be a compression spring that may reset the pushing member 41 after sliding. The pushing part 412 has a recess 4120 that is configured to prevent interference between the pushing member 41 and the fixing shaft 42 during the sliding process along the first direction Z. The recess 4120 is provided with a spring seat 4121. The spring seat 4121 protrudes into the second reset member 44 along the first direction Z to facilitate the installation of the second reset member 44 and to position the second reset member 44 to prevent it from moving in the second direction X and the third direction Y during the sliding process of the pushing member 41.

Referring to FIG. 5A and FIG. 5F, in order to avoid movement interference, the rear connecting plate 414 of the pushing member 41 is provided with a long slot 4140 that extends along the first direction Z. The fixing shaft 42 may slide along the first direction Z within the long slot 4140.

Referring to FIG. 5B and FIG. 5F, when the support device is in the non-ground-contact state, the pushing part 412 of the pushing member 41 is in the first position, that is, protrudes from the bottom wall 221 of the abutting shell 200, and the protrusion 4122 of the pushing member 41 abuts against the bottom wall 221. The second indication information part 432 on the elastic arm 434 of the indication member 43 is exposed through the through-hole 2110 or transparent window of the top wall 211.

Referring to FIG. 5C and FIG. 5F, when an external force is applied to the pushing member 41 by the vehicle floor towards the top wall 211, the pushing member 41 slides relative to the abutting shell 200 until the abutting shell 200 contacts the vehicle floor. The sliding of the pushing member 41 causes the two elastic arms 434 to elastically extend away from each other along the third direction Y within the two sliding channels 230, such that the first indication information 431 on the elastic arm 434 directly faces the through-hole 2110 or transparent window in the upper cover of the abutting shell 200 to be exposed from the abutting shell 200, while the second indication information part 432 on the elastic arm 434 is hidden within the abutting shell 200. This indicates that the support device is in the ground-contact state.

When no external force is applied to the pushing member 41 by the vehicle floor towards the top wall 211, that is, after the external force is eliminated, the pushing member 41 slides out of the bottom wall 221 under the action of the second reset member 44 to drive the two elastic arms 434 to retract towards each other along the third direction Y within the corresponding sliding channels 230, such that the first indication information 431 on the elastic arm 434 is hidden within the abutting shell 200. In the case that the second indication information part 432 is provided on the elastic arm 434, the second indication information part 432 directly faces the through-hole 2110 or transparent window in the upper cover of the abutting shell 200 and is exposed from the abutting shell 200 (see FIG. 5B).

### The Third Embodiment of The Support Device

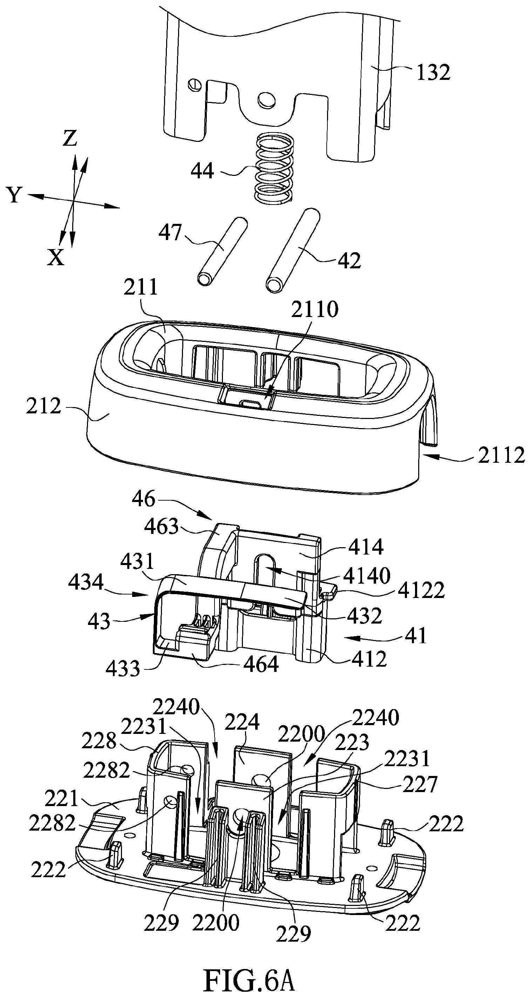

Referring to FIG. 6A to FIG. 6E, the support device according to the third embodiment of the present disclosure includes a support tube 130, an adjustment structure, and a contact indication structure 133.

The support tube 130 and the adjustment structure are the same as those of the support device according to the first embodiment of the present disclosure, which will not be described again here.

The contact indication structure 133 includes an abutting shell 200, an indication member 43, a transmission member 46, and a pushing member 41, all of which are fixedly connected. The pushing member 41 is movable relative to the abutting shell 200 along the first direction Z, to drive the transmission member 46 and the indication member 43 to slide together relative to the abutting shell 200. The indication member 43 is also deformed relative to the abutting shell 200.

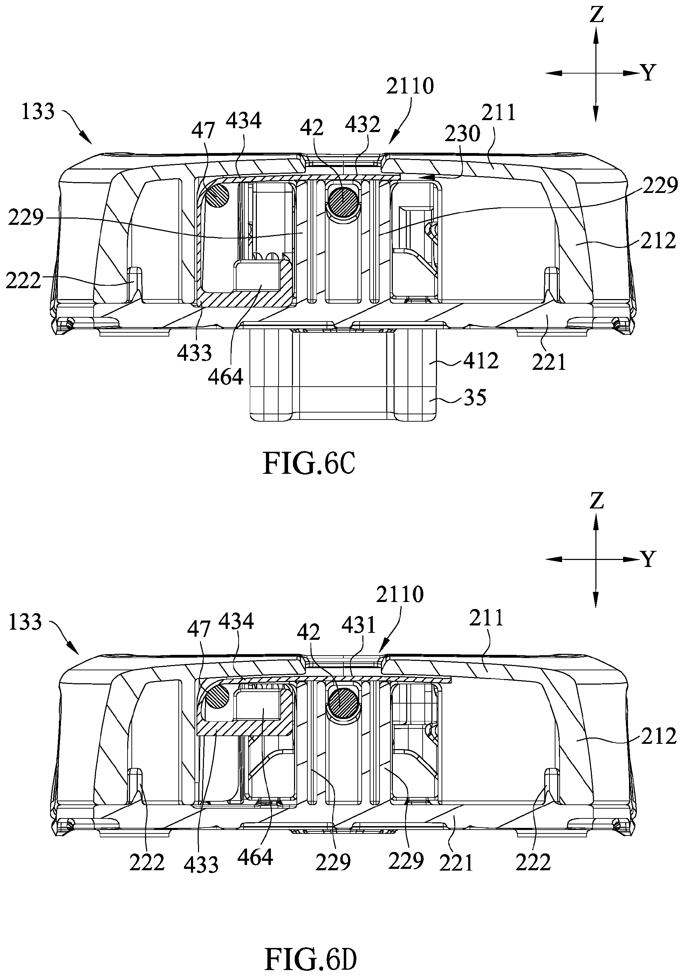

Referring to FIG. 6A and FIG. 6C, the abutting shell 200 in the contact indication structure 133 of this embodiment is similar to that in the second embodiment, with the following differences:

Referring to FIG. 6A, the two guiding columns 229 are located between the two notches 2231 on the front wall 223.

Referring to FIG. 6C, the top wall 211 is provided with only one through-hole 2110 or transparent window.

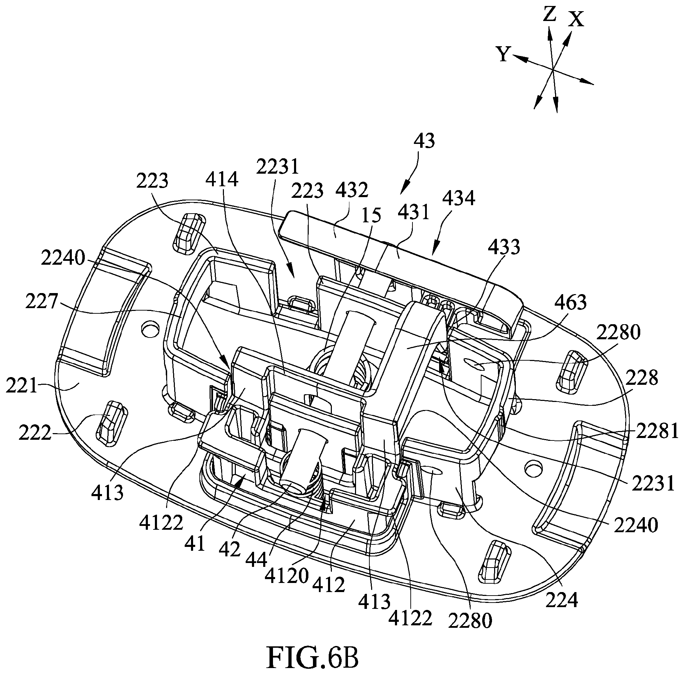

Referring to FIG. 6B and FIG. 6C, in the installation chamber of the third embodiment, based on the second embodiment, one through-hole 2282 is provided on each of the two opposite portions of the second U-shaped wall 228 along the second direction X. The two through-holes 2282 are arranged opposite to each other along the second direction X, and a guiding shaft 47 extends through the two through-holes 2282 along the second direction X. The end of the guiding shaft 47 adjacent to the top wall 211 is substantially flush with the surfaces of the two guiding columns 229 adjacent to the top wall 211. Thus, one sliding channel 230 is formed between the guiding shaft 47, the two guiding columns 229, and the top wall 211 of the abutting shell 200. The sliding channel 230 extends along the third direction Y and along the inner side of the top wall 211. The other structures of the abutting shell 200 in this embodiment are the same as those in the second embodiment, which will not be described again here.

Referring to FIG. 6A and FIG. 6B, the transmission member 46 in this embodiment includes a transmission arm 463 in an L shape and a front connecting plate 464. The transmission arm 463 extends from a vertical arm 413 of the pushing member 41 in the third direction Y towards a side away from the rear connecting plate 414. The front connecting plate 464 extends from a lower end of the transmission arm 463 towards the side away from the rear connecting plate 414. The L-shaped transmission arm 463 has a portion that extends along the second direction X and a portion that extends along the first direction Z.

Referring to FIG. 6A and FIG. 6B, the indication member in this embodiment includes a connecting part 433 and an elastic arm 434 extending from the connecting part 433. The connecting part 433 is connected to the front connecting plate 464, and the elastic arm 434 is located within the sliding channel 230 to slide along the third direction Y, such that the elastic arm 434 may elastically extend towards a side away from the connecting part 433 along the third direction Y or elastically retract towards a side close to the connecting part 433. The surface of the elastic arm 434 close to the top wall 211 is provided with the first indication information 431 and the second indication information part 432. The elastic arm 434 includes a portion that extends along the third direction Y, a portion that extends along the first direction Z, and a portion that is bent relative to the third direction Y and the first direction Z. The bent portion of the elastic arm 434 surrounds the guiding shaft 47.

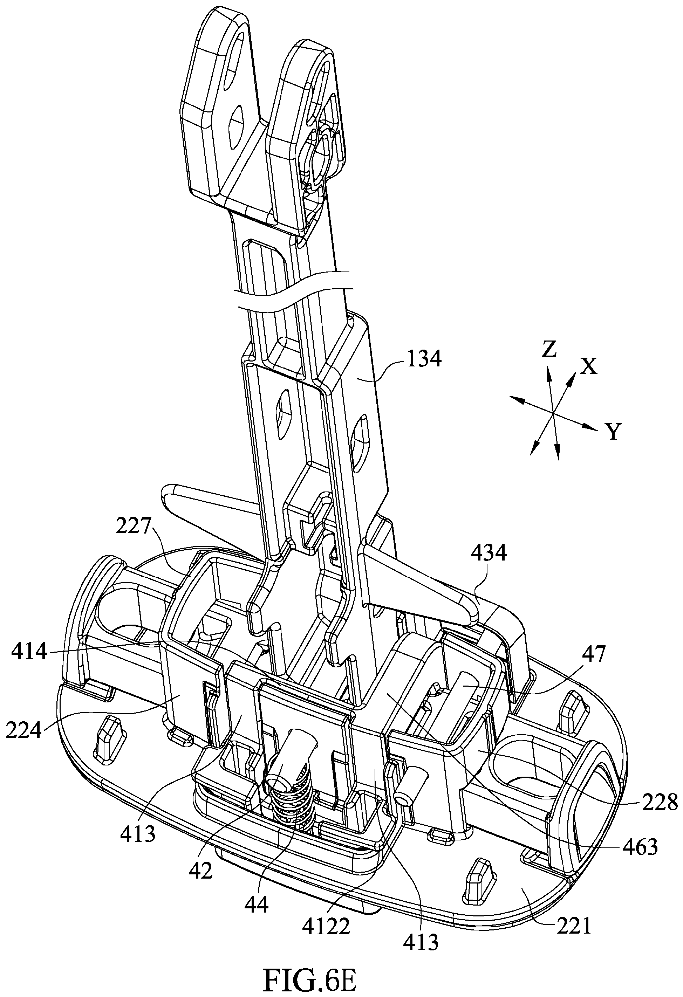

Referring to FIG. 6A and FIG. 6E, the transmission arm 463 is located at a side of the linkage rod 134 in the third direction Y, and the portion of the transmission arm 463 that extends along the first direction Z is disposed in a notch 2231 on the front wall 223 of the installation chamber.

Referring to FIG. 6D, when an external force is applied to the pushing member 41 by the vehicle floor towards the top wall 211, the sliding of the pushing member 41 drives the elastic arm 434 to elastically unfold to a side away from the connecting part 433 along the third direction Y within the sliding channel 230, such that the portion of the elastic arm 434 that extends along the third direction Y gradually becomes long, while the portion that extends along the first direction Z gradually become short. When the first indication information 431 on the elastic strip 43 directly faces the through-hole 2110 or transparent window in the upper cover of the abutting shell 200 and is observed by the user, it can be determined that the support device of this embodiment is in the ground-contact state, and the support device and safety carrier can be used safely

Referring to FIG. 6B and FIG. 6E, when no external force is applied to the pushing member 41 by the vehicle floor towards the top wall 211, that is, after the external force is eliminated, the pushing member 41 slides out of the bottom wall 221 under the action of the elastic member 44, such that an elastic strip 43 elastically retracts towards a side close to the connecting part 433 along the third direction Y within the sliding channel 230, and thus the portion of the elastic arm 434 that extends along the third direction Y gradually becomes short, while the portion that extends along the first direction Z gradually becomes long, until the first indication information 431 on the elastic strip 43 is hidden within the contact indication structure 133. In the case that the second indication information part 432 is provided on the elastic strip 43, the second indication information part 432 directly faces the through-hole 2110 or transparent window in the upper cover of the abutting shell 200 and is exposed out of the contact indication structure 133 (see FIG. 6C).

### The Fourth Embodiment of The Support Device

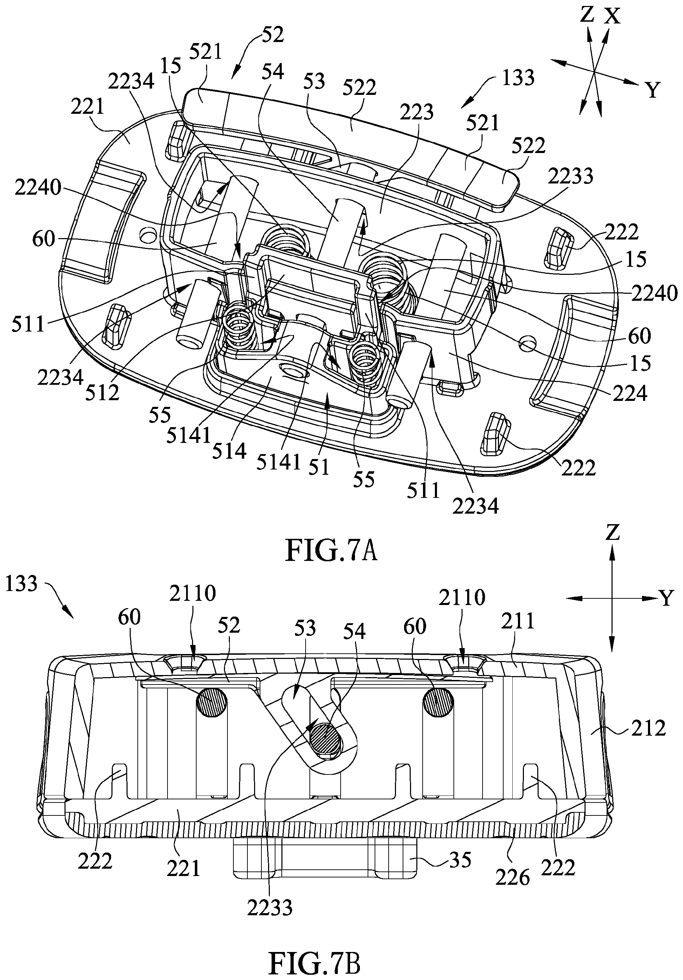

Referring to FIG. 7A to FIG. 7G, the support device according to the fourth embodiment of the present disclosure includes a support tube 130, an adjustment structure, and a contact indication structure 133.

The support tube 130 and the adjustment structure are the same as those in the first embodiment of the support device of the present disclosure, which will not be described again here. The contact indication structure 133 includes an abutting shell 200, an indication member, a transmission member, and a pushing member 51.

The transmission member is fixedly connected to the pushing member 51, and the indication member is slidably connected to the transmission member. The pushing member 51 slides relative to the abutting shell 200 to drive the transmission member to slide relative to the abutting shell 200, to drive the indication member to slide relative to the abutting shell 200 along a direction different from the sliding direction of the pushing member and the transmission member. Specifically, the pushing member 51 slides along the first direction Z relative to the abutting shell 200, while the indication member may slide along the third direction Y relative to the abutting shell 200.

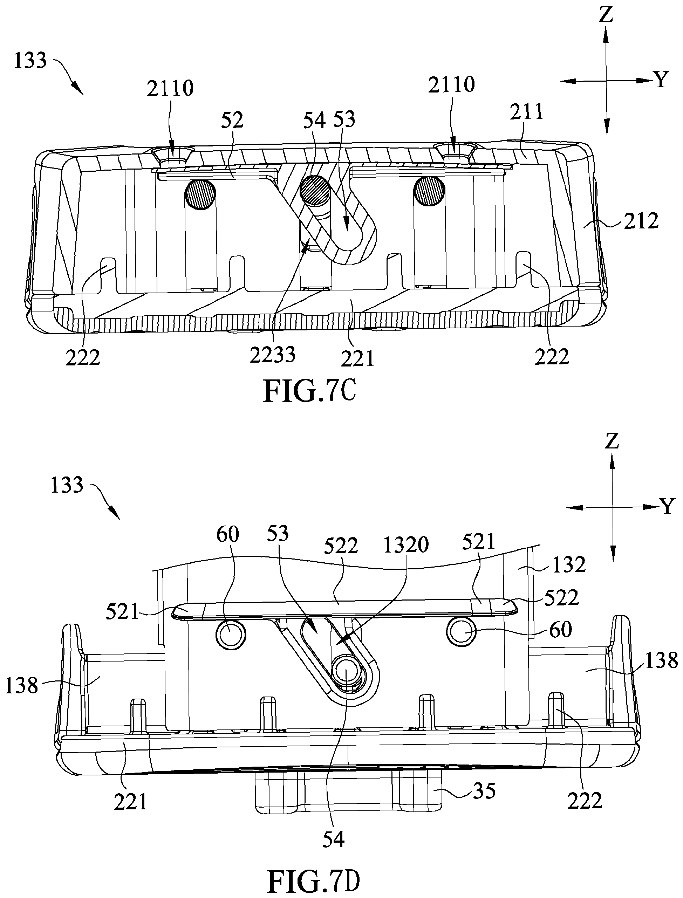

Referring to FIG. 7A and FIG. 7D, in the fourth embodiment of the support device of the present disclosure, the transmission member is a pin shaft 54 extending in a front-to-back direction. The indication member is provided with a beveled slot 53, in which the pin shaft 54 may slide. An extending direction of the beveled slot 53 intersects with both the first direction Z and the third direction Y. The abutting shell 200 is provided with a sliding slot 2233 (see FIG. 7C for details), in which the pin shaft 54 may slide along the first direction Z. The first support tube 132 is provided with a long slot 1320, in which the pin shaft 54 may slide along the first direction Z (see FIG. 7D for details). The various structures of the contact indication structure 133 of the support device according to the fourth embodiment of the present disclosure will be described below.

Referring to FIG. 7A and FIG. 7B, in the support device according to the fourth embodiment of the present disclosure, the upper cover, the lower cover, and the installation chamber of the contact indication structure are similar to those of the contact indication structure in the first embodiment, with differences in that:

The top wall 211 is provided with two through-holes 2110 or transparent windows that are spaced apart along the third direction Y.

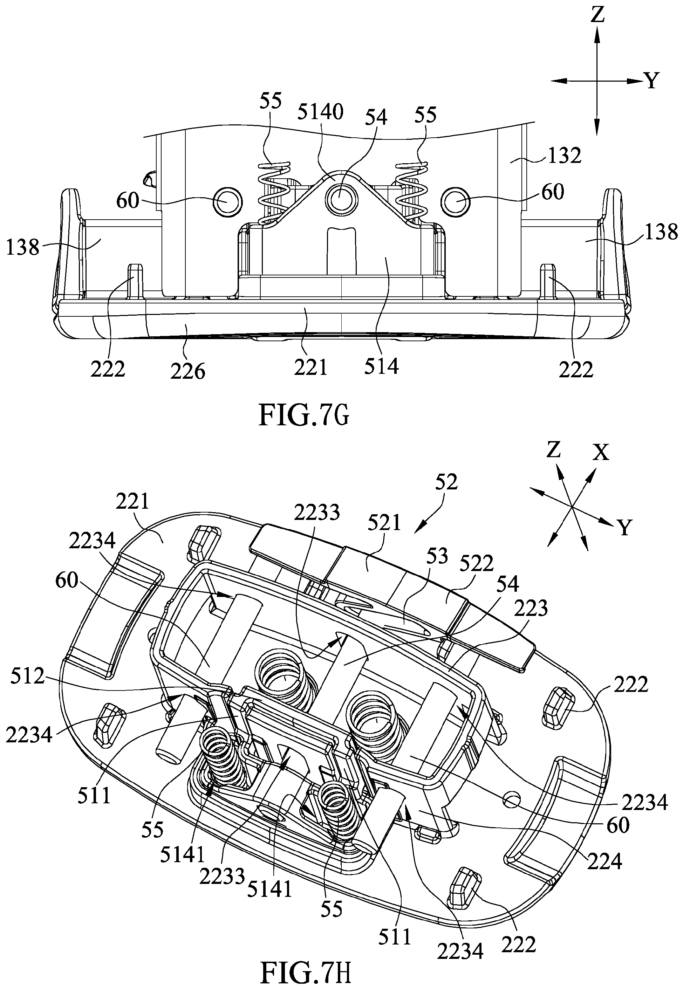

Referring to FIG. 7A and FIG. 7H, the middle portions of the front wall 223 and the rear wall 224 of the installation chamber each have a sliding slot 2233. The sliding slots 2233 are long slots extending along the first direction Z. The two sliding slots 2233 are arranged opposite to each other along the second direction X, and the pin shaft 54 extends through the two sliding slots 2233 along the second direction X. At the same time, the two sliding slots 2233 may guide the sliding of the pin shaft 54 along the first direction Z. The first support tube 132 is provided with a long slot 1320 (see FIG. 7D) at a position corresponding to the sliding slot 2233, through which the pin shaft 54 may slide along the second direction X. The shape and structure of the long slot 1320 on the first support tube 132 may be consistent with the shape and structure of the sliding slot 2233 on the installation chamber.

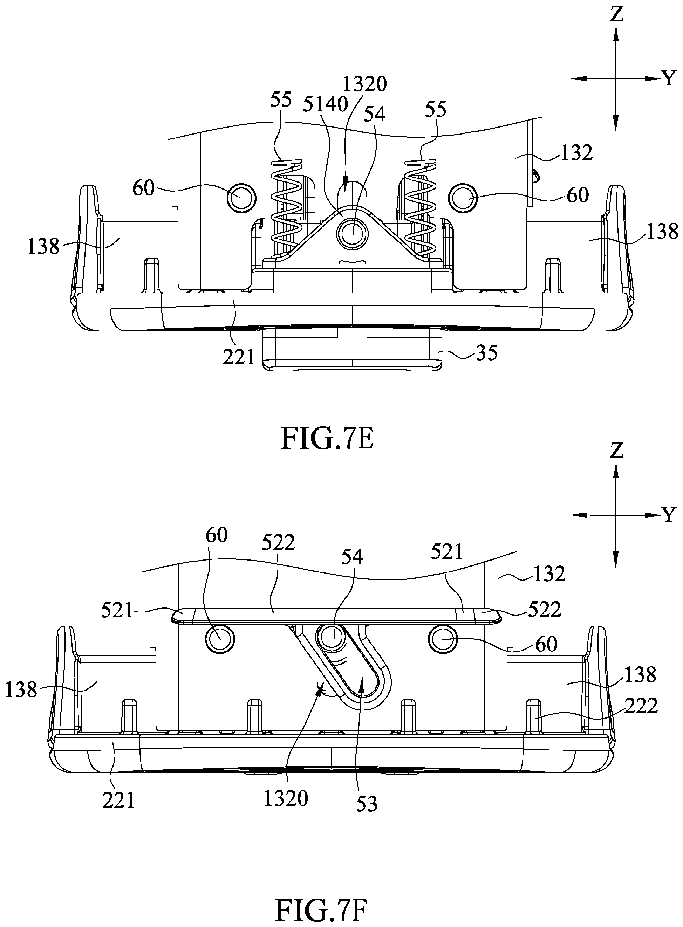

Referring to FIG. 7A and FIG. 7E, the front wall 223 and the rear wall 224 of the installation chamber each have two installation holes 2234 that are symmetrically arranged along the third direction Y relative to the sliding slot 2233. The two installation holes 2234 on the front wall 223 correspond to the two installation holes 2234 on the rear wall 224 along the second direction X. The first support tube 132 is provided with penetration holes at positions corresponding to the installation holes 2234.

Referring to FIG. 7A and FIG. 7B, the support device according to the fourth embodiment of the present disclosure also includes two connecting pins 60. Each connecting pin 60 extends through the penetration holes in the first support tube 132 and the installation holes 2234 in the front wall 223 and the rear wall 224 to connect the support tube 132 with the contact indication structure 133. The connecting pin 60 has the same structure as the rotating shaft 30 in the first embodiment, but is positioned differently. Certainly, in other embodiments, the connecting pin 60 may be fixedly connected to the first support tube 132, the front wall 223, and the rear wall 224.

Referring to FIG. 7A, as an example, the pushing member 51 may include two vertical arms 511, a connecting arm 512, and a pushing part 514. The two vertical arms 511 are arranged opposite to each other along the third direction Y. The connecting arm 512 connects the ends of the two vertical arms 511 that are close to the top wall 211 along the first direction Z and protrudes to a side away from the vertical arms 511 along the second direction X. The connecting arm 512 may be in a U shape. The pushing part 514 connects to the ends of the two vertical arms 511 away from the top wall 211, extends to a side away from the top wall 211, and is located at the side of the vertical arms 511 away from the connecting arm 512 in the second direction X, and the pushing part 514 may be in the shape of a cylinder or a column.

Referring to FIG. 7A, FIG. 7E, and FIG. 7G, the middle portion of the end of the pushing part 514 close to the top wall 211 has a protrusion 5140 protruding towards the top wall 211. The protrusion 5140 is provided with two spring seats 5141 symmetrically arranged on both sides along the third direction Y. Two second reset members 55 are respectively installed on the two spring seats 5141. The second reset member 55 may be a compression spring and located between the top wall 211 and the pushing member 51, to reset the pushing member 51 that has been moved.

Referring to FIG. 7A, FIG. 7B, and FIG. 7C, the indication member of the support device according to the fourth embodiment of the present disclosure includes an elongated indication strip 52. The indication strip 52 extends along the third direction Y and is located at a side of the indication member that is close to the top wall 211. The surface of the indication strip 52 close to the top wall 211 is provided with two first indication information 521 that are spaced apart along the third direction Y.

In some other embodiments, in addition to the first indication information 521, other areas on the surface of the indication strip 52 close to the top wall 211 is also provided with two second indication information part 522, which are spaced apart along the third direction Y.

Referring to FIG. 7D and FIG. 7F, it can be seen that the two ends of the indication strip 52 along the third direction Y respectively abut against the two connecting pins 60 in the direction towards the bottom wall 221 to ensure that the two ends of the indication strip 52 will not be tilted in the third direction Y.

Referring to FIG. 7A and FIG. 7B, the side of the indication strip 52 of the indication member close to the bottom wall 221 is provided with a beveled slot 53. The beveled slot 53 forms an acute angle α with the indication strip 52. The acute angle α between the beveled slot 53 and the indication strip 52 may be within a range of 20° to 70°, such as 30°, 40°, 50°, 55°, 60°, etc. The pin shaft 54 is fixed to the pushing member 51 and extends through the beveled slot 53 along the second direction X.

Referring to FIG. 7D to FIG. 7G, FIG. 7D to FIG. 7G show a transition process of the support device according to the fourth embodiment of the present disclosure from the non-ground-contact state to the ground-contact state.

When the support device is in the non-ground-contact state, as shown in FIG. 7B, FIG. 7D and FIG. 7E, the pushing member 51 protrudes from the bottom wall 221 of the abutting shell 200 of the contact indication structure 133. The pin shaft 54 is located at the end of the beveled slot 53 close to the bottom wall 221. The second indication information part 522 on the indication member is exposed upward from the contact indication structure 133, that is, the second indication information part 522 corresponds to the through-hole 2110 or transparent window in the upper cover, and the first indication information 521 is hidden within the abutting shell 200 of the contact indication structure 133.

When the support device is in the ground-contact state, as shown in FIG. 7C, FIG. 7F, and FIG. 7G, under the action of the upward force applied to the pushing member 51 by the vehicle floor, the pushing member 51 slides along the first direction Z towards the top wall 211 until the abutting shell 200 comes into contact with the vehicle floor. The pin shaft 54 slides along the first direction Z with the pushing member 51 to the end of the beveled slot 53 close to the top wall 211, to drive the indication member to slide in the positive direction along the third direction Y, such that the first indication information 521 on the indication member is exposed upward from the contact indication structure 133, that is, the first indication information 521 corresponds to the through-hole 2110 or transparent window in the upper cover.

When the external force acting on the pushing member 51 is eliminated, under the action of the second reset member 55, the pushing member 51 slides along the first direction Z away from the top wall 211, such that the pushing part 514 and the ground-contact member 35 protrude from the bottom wall 221 of the contact indication structure 133. During this process, the pin shaft 54 slides with the pushing member 51 to the end of the beveled slot 53 close to the bottom wall, to drive the indication member to slide in the reverse direction along the third direction Y with the beveled slot 53, such that the second indication information part 522 on the indication member may be exposed upward to correspond to the through-hole 2110 or transparent window in the upper cover, and the first indication information 521 is hidden within the abutting shell 200 of the contact indication structure 133.

### The Fifth Embodiment of The Support Device

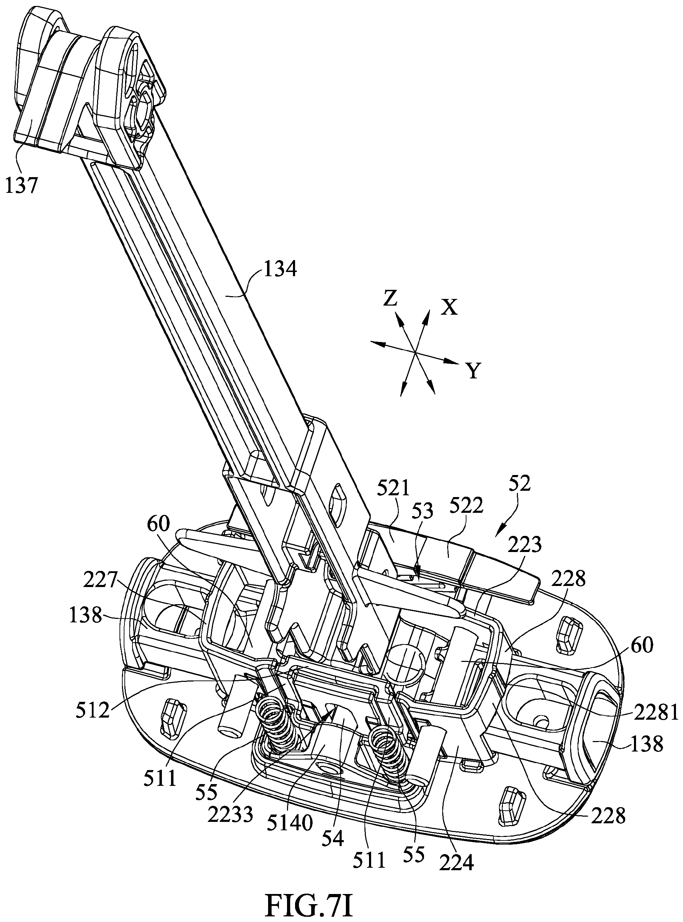

Referring to FIG. 7H and FIG. 7I, the support device according to the fifth embodiment of the present disclosure includes a support tube 130, an adjustment structure, and a contact indication structure 133.

The difference of the support device between the fifth embodiment and the fourth embodiment of the present disclosure is that the top wall 211 is provided with only one through-hole 2110 or transparent window. The surface of the indication strip 52 adjacent to the top wall 211 is merely provided with one first indication information 521 and one second indication information part 522.

The other structures, functions, and operating processes of the support device according to the fifth embodiment of the present disclosure are the same as those of the fourth embodiment, which will not be described again here.

### the Sixth Embodiment of the Support Device

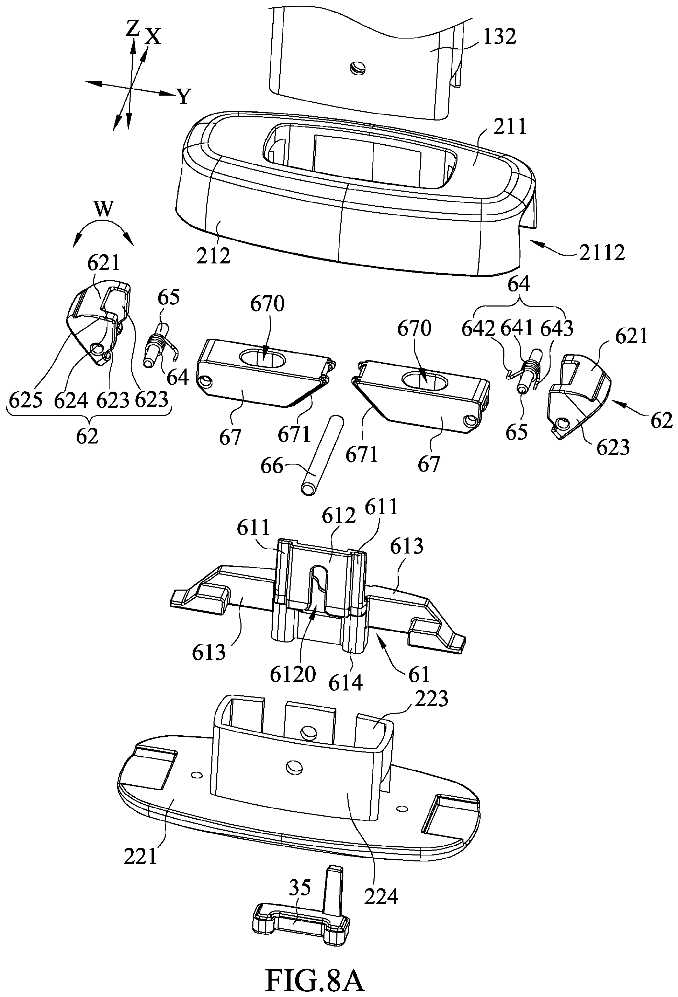

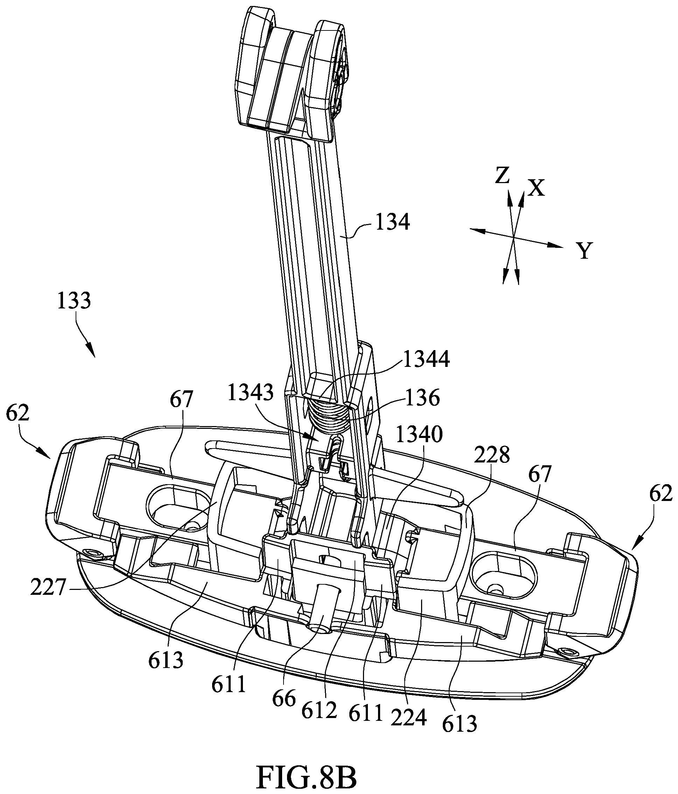

Referring to FIG. 8A and FIG. 8B, the support device according to the sixth embodiment of the present disclosure includes a support tube 130, an adjustment structure, and a contact indication structure 133.

The support tube 130 is the same as that in the first embodiment of the support device of the present disclosure, which will not be described again here.

The adjustment structure includes a linkage rod 134, an engaging hook 137, two drive blocks 67, and two indication members 62. The linkage rod 134 and the engaging hook 137 are the same as those in the first embodiment of the support device of the present disclosure, which will not be described again here. However, in this embodiment, the two unlocking buttons 138 of the support device from the first embodiment of the present disclosure are omitted. Instead, two drive blocks 67 and two indication members 62, connected one-to-one, functionally replace the two unlocking buttons 138.

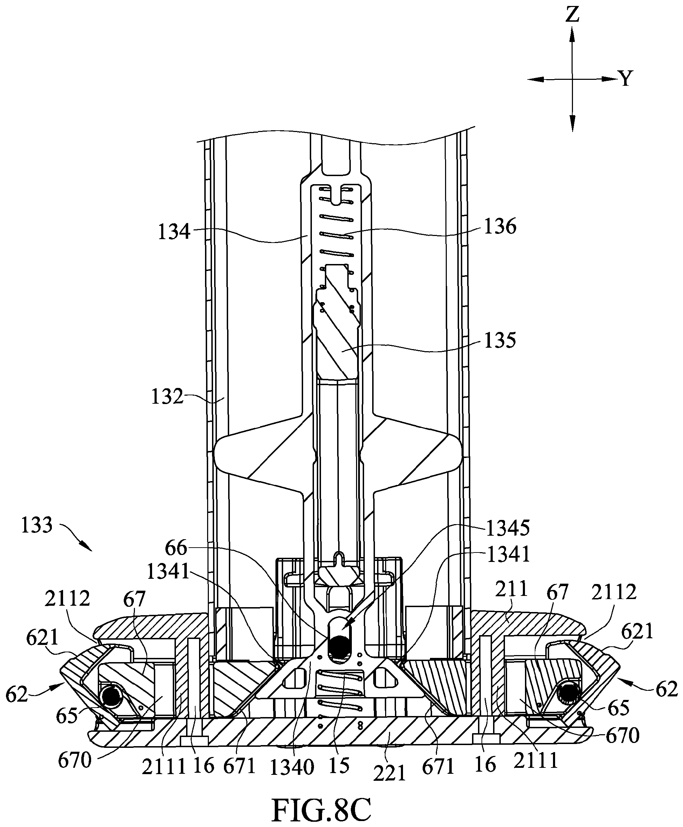

As shown in FIG. 8A and FIG. 8C, the two drive blocks 67 are spaced apart and disposed opposite to each other along the third direction Y within the abutting shell 200, and the two drive blocks 67 are not exposed from the abutting shell 200 along the third direction Y for the user operation. The two drive blocks 67 are respectively slidably connected to the abutting shell 200 via fixing ribs 2111. Each drive block 67 is provided with a penetration hole 670, identical to the penetration hole 1380 in the unlocking button 138, to slidably connect with the fixing rib 2111. The two indication members 62 are located at the outside of the two drive blocks 67 along the third direction Y, respectively, and are exposed from the abutting shell 200 for the user operation.

As shown in FIG. 8C, specifically, each indication member 62 is connected to the drive block 67 on the same side along the third direction Y, and both the indication member 62 and the drive block 67 may slide together relative to the abutting shell 200 along the third direction Y to replace the sliding of the unlocking button 138 relative to the abutting shell 200 along the third direction Y, to drive the linkage rod 134 to slide within the first support tube 132 along the first direction Z. Specifically, similar to the first embodiment, each drive block 67 has a second inclined surface 671 on the side close to the linkage rod 134 for sliding connection with the first inclined surface 1341 .

Each indication member 62 may also move relative to the drive block 67 on the same side and the abutting shell 200 in a manner different from sliding along the third direction Y. Specifically, each indication member 62 may rotate along a rotational direction W relative to the drive block 67 and the abutting shell 200 on the same side.

Referring to FIG. 8A and FIG. 8C, specifically, each indication member 62 is connected to the drive block 67 on the same side via a pivot shaft 65. The pivot shaft 65 is spaced apart from the penetration hole 670 of the drive block 67 on the same side along the third direction Y. The pivot shaft 65 extends through the drive block 67 along the second direction X and is fixedly connected to the indication member 62, thereby connecting the drive block 67 and the indication member 62 together. At the same time, the pivot shaft 65 may rotate around the second direction X relative to the drive block 67 on the same side, such that the indication member 62 may rotate around the second direction X relative to the drive block 67 and the abutting shell 200 on the same side via the pivot shaft 65, that is, rotate along the rotational direction W. It is understood that the rotational direction W is provided around the second direction X.

Referring to FIG. 8A to FIG. 8G, the contact indication structure includes an abutting shell 200, a pushing member 61, and two indication members 62. The abutting shell 200 is similar to that of the support device according to the first embodiment of the present disclosure, but without the fixing columns 222 and the reinforcing ribs 2211 provided, which will not be described again here. The pushing member 61 slides relative to the abutting shell 200 to drive the indication member 62 to rotate relative to the abutting shell 200. The indication member 62 is provided with the first indication information 621, and the pushing member 61 slides relative to the abutting shell 200 to drive the indication member 62 to rotate relative to the abutting shell 200, such that the first indication information 621 is exposed.

Hereinafter, the pushing member 61 in the contact indication structure of the support device according to the sixth embodiment of the present disclosure is introduced.

Referring to FIG. 8A and FIG. 8B, the pushing member 61 in the contact indication structure 133 of this embodiment may slide along the first direction Z relative to the abutting shell 200 and may protrude from the bottom wall 221 of the abutting shell 200.

The pushing member 61 includes a body 610 and two pushing arms 613. The two pushing arms 613 are either connected to the body 610 or are integrally formed with the body 610. The two pushing arms 613 extend outward from the body 610 along two sides of the third direction Y.

When the support device is in the non-ground-contact state, the body 610 of the pushing member 61 extends from the lower end of the support device.

Referring to FIG. 8A, as an example, the body 610 of the pushing member 61 includes two vertical arms 611, a connecting plate 612, and a pushing part 614. The two vertical arms 611 are disposed opposite to each other along the third direction Y. The connecting plate 612 is connected between the two vertical arms 611, is in a U shape, and may protrude to a side away from the vertical arms 611 in the second direction X. The pushing part 614 connects to the ends of the two vertical arms 611 away from the top wall 211 and extends away from the top wall 211. The pushing part 614 may be in the shape of a cylinder or a column. The pushing arms 613 extend outward along the third direction Y from the pushing part 614.

Referring to FIG. 8A , similar to the second embodiment, the contact indication structure 133 further includes the fixing shaft 66, and the pushing member 61 is provided with a recess 6120 for the fixing shaft 66 to slide in the first direction Z.

Hereinafter, the indication member 62 in the contact indication structure of the support device according to the sixth embodiment of the present disclosure.

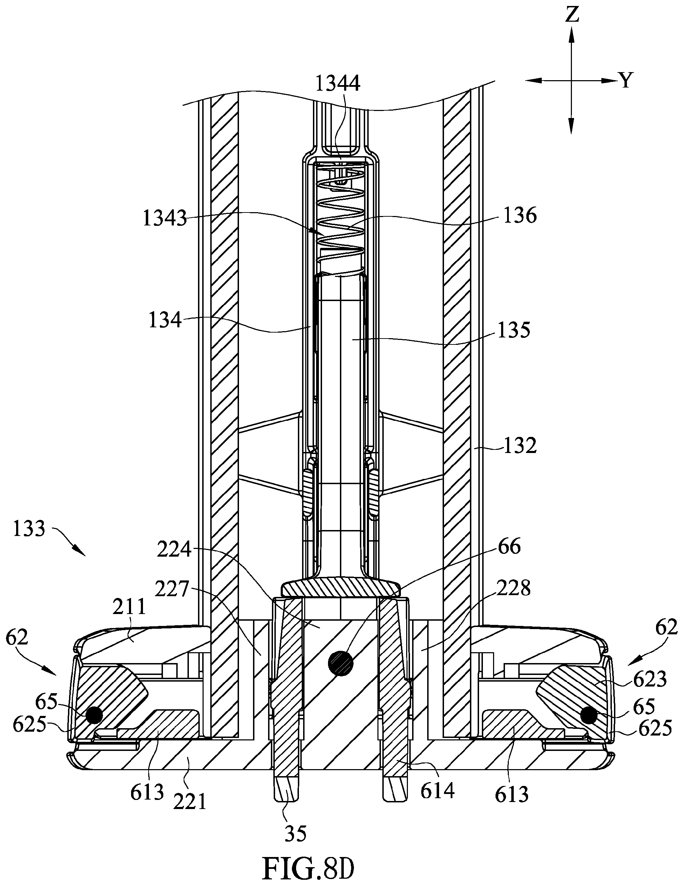

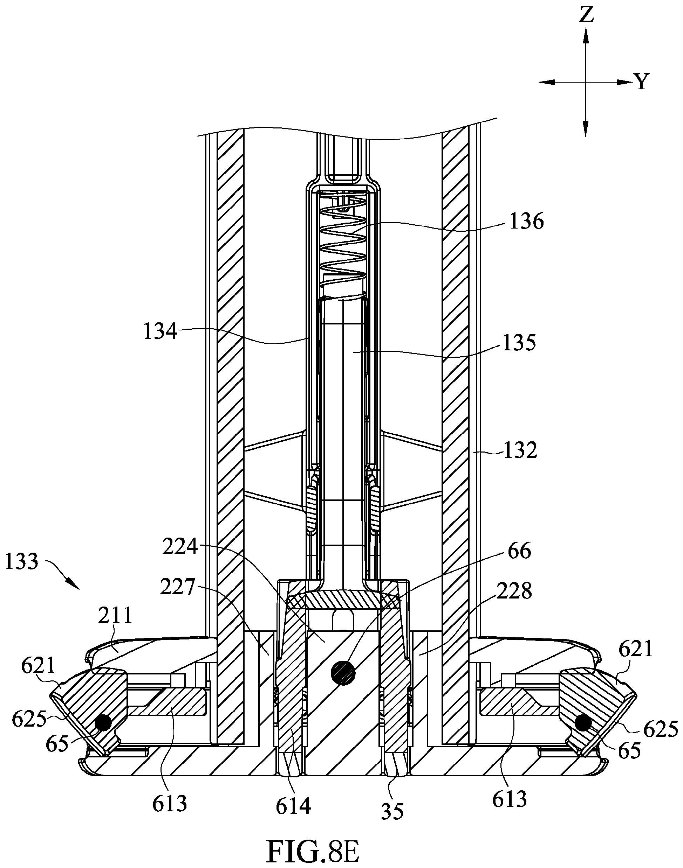

Referring to FIG. 8D and FIG. 8E, when the pushing member 61 is in the first position, i.e., when the support device is in the non-ground-contact state, at least a part of the indication member 62 and the pushing member 61 on the same side along the third direction Y are disposed opposite to each other along the first direction Z, so that the two pushing arms 613 of the pushing arm 61 slide along the first direction Z to drive the two indication members 62 to rotate relative to the drive block 67 and the abutting shell 200 and drive the indication member 62 to protrude from the abutting shell 200, so as to expose the first indication information 621 on the indication member 62. However, the two pushing arms 613 do not drive the drive block 67 to slide along the third direction Y.

In this embodiment, when the indication member 62 and the drive block 67 slide relative to the abutting shell 200 along the third direction Y, the pushing member 61 is not driven to slide along the first direction Z. When the pushing member 61 slides along the first direction Z, only the indication member 62 is driven to rotate relative to the drive block 67 along the rotational direction W, but the drive block 67 is not driven to slide along the third direction Y. It can be seen that the drive block 67 and the pushing member 61 are not disposed on a movement path, and their movement directions are different. This can ensure that when adjusting the length of the support tube 130, the display of the first indication information 621 on the indication member 62 cannot be affected. Similarly, the display of the first indication information 621 on the indication member 62 does not affect the adjustment of the length of the support tube 130. In this embodiment, the indication member 62 has two different movement directions. When the indication member 62 moves along one of the movement directions, the drive block 67 is driven to move together, but the pushing member 61 is not driven to move. When the indication member 62 moves along the other direction, it is driven by the pushing member 61 to expose or hide the first indication information 621. Therefore, the indication member 62 in this embodiment not only has a function of indicating information but also a function of driving the linkage rod 134.

Referring to FIG. 8A, as an example, the indication member 62 includes two fan-shaped plates 623 disposed opposite to each other and an arc-shaped plate 624 for connecting the two fan-shaped plates 623. The first indication information 621 is disposed on the outer surface of the arc-shaped plate 624.

Furthermore, the indication member 62 also includes a cover plate 625. The cover plate 625 is connected to the two fan-shaped plates 623 and the arc-shaped plate 624. The two fan-shaped plates 623, the arc-shaped plate 624, and the cover plate 625 together form a cavity, that is, the indication member 62 is a hollow structure, which is lightweight, easy to move, and not prone to jamming.

The contact indication structure may also include a first reset member 64. The first reset member 64 is disposed on the pivot shaft 65 and has a tendency to hide the first indication information 621 of the indication member 62 within the contact indication structure.

Referring to FIG. 8A, as an example, the first reset member 64 is a torsion spring. The torsion spring includes a spiral body 641 and a first lead-out end 642 and a second lead-out end 643 connected to the spiral body 641. The spiral body 641 is sleeved onto the pivot shaft 65. The first lead-out end 642 abuts against the drive block 67, and the second lead-out end 643 abuts against the indication member 62, for example, abuts against the cover plate 625.

Referring to FIG. 8D and FIG. 8E, the support device according to the sixth embodiment of the present disclosure also includes a reset rod 135 and a second reset member 136. The linkage rod 134 has a receiving groove 1343 extending along the first direction Z. The reset rod 135 is disposed in the receiving groove 1343 and may slide within the receiving groove 1343 along the first direction Z. The end of the reset rod 135 adjacent to the bottom wall 221 in the first direction Z abuts against the pushing member 61 of the contact indication structure 133. The second reset member 136, for example, is a compression spring, disposed between the end of the reset rod 135 away from the bottom wall 221 in the first direction Z and a groove wall 1344 of the receiving groove 1343 away from the bottom wall 221 along the first direction Z.

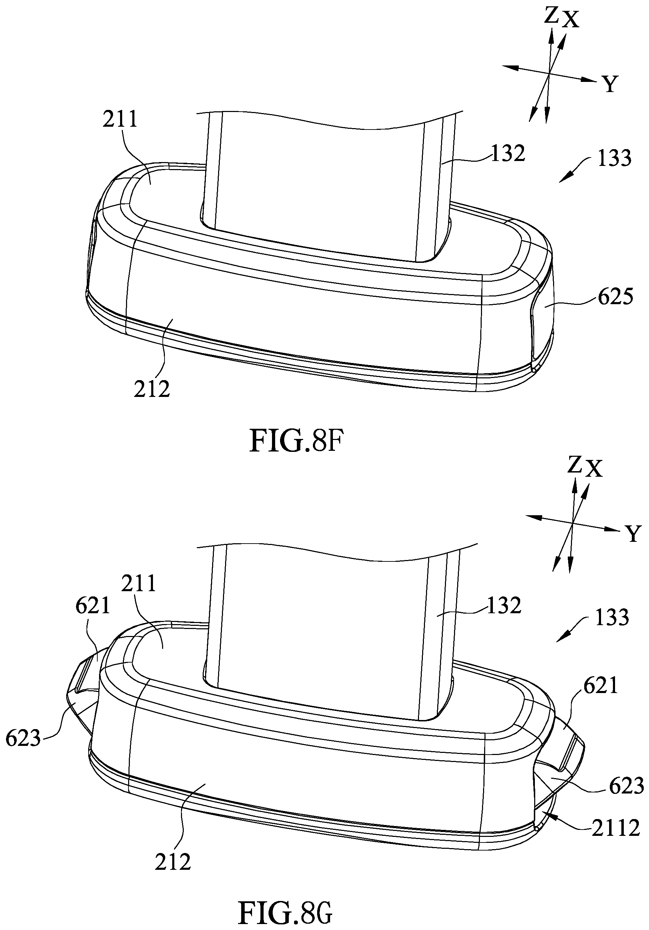

As shown in FIG. 8D and FIG. 8F, when the support device is in the non-ground-contact state, under the action of the second reset member 136, a part of the pushing part 614 of the pushing member 61 and the ground-contact member 35 protrude from the bottom wall 221 of the contact indication structure 133. The first indication information 621 of the indication member 62 is hidden by the abutting shell 200 and may not be observed by the user. However, the cover plate 625 of the indication member 62 is exposed from the abutting shell 200, on which the user may press along the third direction Y.

Referring to FIG. 8A and FIG. 8F, a shape of the cover plate 625 of the indication member 62 may be consistent with that of the installation opening 2112 on the abutting shell 200. When the support device is in the non-ground-contact state, the cover plate 625 of the indication member 62 is disposed in the installation opening 2112 of the peripheral wall 212 and encloses the installation opening 2112. This not only makes the appearance aesthetical but also prevents dust and foreign objects from entering the contact indication structure. In some other embodiments, the size of the cover plate 625 may also be slightly smaller than that of the installation opening 2112.

Referring to FIG. 8E and FIG. 8G, when the pushing member 61 is subjected to an external force, for example, a force applied by the vehicle floor towards the top wall 211, the pushing member 61 slides relative to the abutting shell 200 along the third direction Z until the abutting shell 200 comes into contact with the vehicle floor. The end of the pushing arm 613 contacts the indication member 62, and the pushing arm 613 drives the indication member 62 to rotate along the positive direction around the pivot shaft 65, such that the indication member 62 protrudes outward from the installation opening 2112 of the contact indication structure and the first indication information 621 on the indication member 62 is exposed to be observed by the user. At this time, it indicates that the support device is in the ground-contact state. During the above sliding process of the pushing member 61, the pushing member 61 pushes the reset rod 135 upward, thereby compressing the second reset member 136.

After the external force is eliminated, under the elastic force of the second reset member 136, the reset rod 135 slides downward, such that the pushing part 614 of the pushing member 61 protrudes from the bottom wall 221 of the contact indication structure 133. During this process, under the action of the first reset member 64, the indication member 62 rotates in the reverse direction around the pivot shaft 65, such that the indication member 62 is accommodated within the abutting shell 200 of the contact indication structure, and the first indication information 621 on the indication member 62 is hidden within the abutting shell 200 to not be observed by the user. At this time, it indicates that the support device is in the non-ground-contact state.

It can be understood that the various embodiments/implementations provided by the present application may be combined with each other without contradiction, and will not be exhaustively described herein.

In the embodiments of the present disclosure, the terms "first", "second" and "third" are used solely for descriptive purposes and should not be interpreted as indicating or implying relative importance. The term "a plurality of" refers to two or more, unless otherwise specifically limited. The terms such as "installation", "connection", "connect" and "fix" should be broadly understood, for example, the "connection" may mean fixed connection, a detachable connection, or an integral connection; the "connect" may be a direct connect or an indirect connect through an intermediate medium. For ordinary person skilled in the art, the specific meanings of the above terms in the embodiments of the present disclosure may be interpreted according to specific situations.

In the embodiments of the present disclosure, it should be understood that the wordings such as "up", "down", "left", "right", "front", "back" indicating directions or position relationships are based on the directions or position relationships shown in the figures. These wordings are merely used for the convenience of describing the embodiments of the present disclosure and simplifying the description, rather than being interpreted as indicating or implying that the device or unit referred to must have a specific direction and may be constructed and operated in a specific orientation. Therefore, these wordings should not be understood as limiting the embodiments of the present disclosure.

In the description of the specification, the terms such as "one embodiment", "some embodiments", "specific embodiment" refer to that specific features, structures, materials, or characteristics described in conjunction with the embodiments or the examples are included in at least one embodiment or example of the present disclosure. In the specification, the illustrative expressions of the above terms do not necessarily refer to the same embodiment or example. Moreover, the specific features, structures, materials, or characteristics described may be combined in any one or more embodiments or examples in a suitable manner.

## Claims

1. A support device, comprising:
a linkage rod (134); and
a contact indication structure (133), comprising:
an abutting shell (200), the linkage rod (134) being movable relative to the abutting shell (200) along a first direction;
a pushing member (31), being movable relative to the abutting shell (200) and having a first position and a second position, the pushing member (31) being located at one side of the linkage rod (134) in a second direction intersecting with the first direction;
an indication member (32), being movable relative to the abutting shell (200) and provided with a first indication information (321), the indication member (32) being located at another side of the linkage rod (134) in the second direction; and
a transmission member (3), being movable relative to the abutting shell (200) and extending between the pushing member (31) and the indication member (32);
wherein when the pushing member (31) is in the first position, the first indication information (321) is hidden within the abutting shell (200); and when the pushing member (31) is in the second position, the first indication information (321) is exposed from the abutting shell (200), the pushing member (31) being movable towards the second position relative to the abutting shell (200) to drive both the indication member (32) and the transmission member (3) to move relative to the abutting shell (200).

2. The support device according to claim 1, wherein the transmission member (3) is pivotally connected to the abutting shell (200), the transmission member (3) is fixedly connected to the indication member (32), the pushing member (31) is slidably connected to the abutting shell (200), the pushing member slides towards the second position relative to the abutting shell (200) to drive the transmission member (3) and the indication member (32) to rotate together along a positive direction relative to the abutting shell (200).

3. The support device according to claim 2, wherein the transmission member (3) comprises an abutting part (34), the abutting part (34) and the pushing member (31) are located at a same side of the linkage rod (134) in the second direction, when the pushing member (31) is in the first position, at least a part of the abutting part (34) is disposed opposed to the pushing member (31) in a sliding direction of the pushing member (31), the pushing member slides towards the second position to drive the abutting part (34) to rotate along the positive direction relative to the abutting shell (200), to drive the transmission member (3) and the indication member (32) to rotate together along the positive direction relative to the abutting shell (200).

4. The support device according to claim 3, wherein the abutting part (34) comprises an abutting plane (346) parallel to the second direction, the pushing member slides along the first direction, when the pushing member (31) is in the first position, the abutting plane (346) is opposed to the pushing member (31) along the first direction.

5. The support device according to claim 4, wherein when the pushing member (31) is in the first position, the abutting plane (346) is perpendicular to the first direction; and when the pushing member (31) is in the second position, the abutting plane (346) is parallel to the first direction.

6. The support device according to claim 5, wherein the transmission member further comprises a rotating shaft (30), the rotating shaft (30) extends along the second direction and is pivotally connected to the abutting shell (200) around the second direction, the abutting part (34) further comprises a fixing portion (341) and an extension portion (342), the fixing portion (341) is sleeved onto the rotating shaft (30) and is fixedly connected to the rotating shaft (30), the extension portion (342) extends outward from the fixing portion (341), a part of the abutting plane (346) is located at the fixing portion (341), and another part of the abutting plane (346) is located at the extension portion (342).

7. The support device according to any one of claims 3-5, wherein the transmission member (3) further comprises a rotating shaft (30), the rotating shaft (30) extends along the second direction and is pivotally connected to the abutting shell (200) around the second direction, and the abutting part (34) and the indication member (32) are secured to the rotating shaft (30), respectively.

8. The support device according to claim 7, wherein the contact indication structure (133) further comprises a first reset member for driving the transmission member to rotate in a reverse direction opposite to the positive direction relative to the abutting shell (200), the first reset member is a torsion spring, the torsion spring is sleeved on the rotating shaft (30), and the torsion spring includes a first lead-out end connected to the abutting shell (200) and a second lead-out end connected to the contact indication structure, or the torsion spring includes a first lead-out end connected to the abutting shell (200) and a second lead-out end connected to the abutting part (34).

9. The support device according to any one of claims 2-8, wherein the contact indication structure (133) further comprises a first reset member (64) for driving the transmission member (3) to rotate in a reverse direction opposite to the positive direction relative to the abutting shell (200), the first reset member (64) is disposed between the indication member (32) and the abutting shell (200) or between the transmission member (3) and the abutting shell (200).

10. The support device according to any one of claims 2-9, wherein the indication member (32) comprises a limiting part (324), the abutting shell (200) comprises a blocking part located at a side of the limiting part (324) in a reverse direction opposite to the positive direction, when the pushing member (31) is in the first position, the limiting part (324) abuts against the blocking part to prevent the transmission member (3) and the indication member (32) from rotating together in the reverse direction relative to the abutting shell (200).

11. The support device according to any one of claims 1 to 10, further comprising a support tube (130), the support tube (130) comprising a first support tube (132) connected to the abutting shell (200) and a second support tube sleeved over the first support tube (132), the second support tube (131) being provided with a plurality of engaging holes arranged along the first direction;
wherein the support device further comprises an adjustment structure, the adjustment structure comprises:
an engaging hook (137) disposed inside the first support tube (132) and swinging along a third direction relative to the first support tube (132), the third direction intersecting with both the first direction and the second direction;
an unlocking button sliding along the third direction relative to the first support tube (132);
a linkage assembly disposed between the engaging hook (137) and the unlocking button (138), comprising a linkage rod (134), the linkage rod (134) being disposed inside the first support tube (132) and sliding along the first direction relative to the first support tube (132), the linkage rod (134) being slidably connected to both the unlocking button (138) and the engaging hook (137);
wherein, the unlocking button slides along the third direction to drive the linkage rod (134) to slide along the first direction, thereby driving the engaging hook (137) to swing around the third direction relative to the first support tube (132) to engage with or disengage from any one of the engaging holes.

12. The support device according to claim 11, wherein the transmission member further comprises a rotating shaft (30), the rotating shaft (30) extends along the second direction and is pivotally connected to the abutting shell (200) around the second direction, the rotating shaft (30) passes through the abutting shell (200) and the first support tube (132) along the second direction so that the two are relatively fixed.

13. The support device according to any one of claims 11-12, wherein the linkage assembly further comprising a limiting rod (141) and a drive rod (142), the limiting rod (141) and the drive rod (142) are fixedly connected to the engaging hook (137), the drive rod (142) is spaced apart from the limiting rod (141) along the first direction and is closer to a hook portion of the engaging hook (137) than the limiting rod (141), the linkage rod (134) is movably connected the engaging hook (137) through the limiting rod (141) and the drive rod (142), the linkage rod (134) is provided with a sliding hole (1347) through which the limiting rod (141) may pass, and the sliding hole (1347) extends along the first direction, the linkage rod (134) is provided with a drive hole (1346) through which the drive rod (142) may pass, and the drive hole (1346) extends in a direction intersecting with both the first direction and the second direction.

14. The support device according to claim 13, wherein the linkage assembly further comprising a positioning plug (143), the positioning plug (143) is fixed to the first support tube (132), the positioning plug (143) is provided with a pivot hole (1348) to allow the limiting rod (141) to pass through, the limiting rod (141) extends through the positioning plug (143), the linkage rod (134), and the engaging hook (137) along the third direction and is pivotally connected to the positioning plug (143), the drive rod (142) extends through the positioning plug (143), the linkage rod (134), and the engaging hook (137) along the third direction and is movably connected to the positioning plug (143), the positioning plug (143) is provided with a clearance hole through which the drive rod (142) may slide, and the clearance hole extends along the second direction.

15. A safety seat (120), comprising:
a base (110) provided with a connecting member (150) for connection to a vehicle seat (120); and
the support device according to any one of claims 1 to 14, having an unfolded state away from the base (110) and a folded state adhering to the base (110), when the support device is in the unfolded state, the pushing member (31,41) is located at a side of the linkage rod (134) close to the connecting member (150) in the second direction, the indication member (32) is located at a side of the linkage rod (134) away from the connecting member (150) in the second direction.
